Europäisches Patentamt

European Patent Office

Office européen des brevets

(19)

(11) **EP 0 909 373 B1**

(12) **FASCICULE DE BREVET EUROPEEN**

(45) Date de publication et mention
de la délivrance du brevet:
**12.04.2000 Bulletin 2000/15**

(51) Int Cl.[7]: **G01F 1/66**

(86) Numéro de dépôt international:
**PCT/FR97/01166**

(21) Numéro de dépôt: **97931835.9**

(22) Date de dépôt: **30.06.1997**

(87) Numéro de publication internationale:
**WO 98/00686 (08.01.1998 Gazette 1998/01)**

(54) **PROCEDE ET DISPOSITIF DE MESURE D'UN DEBIT DE FLUIDE EN ECOULEMENT**

VERFAHREN UND VORRICHTUNG ZUR MESSUNG EINER STRÖMENDEN FLÜSSIGKEIT

METHOD AND DEVICE FOR MEASURING THE RATE OF FLOW OF A FLOWING FLUID

(84) Etats contractants désignés:
**AT CH DE DK FI FR GB IT LI NL SE**
Etats d'extension désignés:
**LT LV RO SI**

(30) Priorité: **01.07.1996 FR 9608183**

(43) Date de publication de la demande:
**21.04.1999 Bulletin 1999/16**

(73) Titulaire: **SCHLUMBERGER INDUSTRIES**
**92120 Montrouge (FR)**

(72) Inventeur: **BAZIN, Alain**
**F-94800 Villejuif (FR)**

(74) Mandataire: **Dupont, Henri**
**Schlumberger Industries,**
**Direction Technique,**
**Propriété Intellectuelle,**
**B.P. 620-05**
**92542 Montrouge Cédex (FR)**

(56) Documents cités:
**EP-A- 0 179 541        EP-A- 0 426 309**
**WO-A-86/02722        US-A- 5 052 230**

## Description

L'invention est relative à un procédé de mesure d'un débit de fluide en écoulement consistant à transmettre consécutivement entre deux transducteurs ultrasonores espacés dans la direction de l'écoulement du fluide respectivement deux signaux ultrasonores qui se propagent dans des sens opposés, chaque transducteur recevant respectivement un signal ultrasonore.

L'invention se rapporte également à un dispositif de mesure d'un débit de fluide en écoulement.

Il est connu depuis de nombreuses années de mesurer le débit d'un fluide comme par exemple de l'eau chaude s'écoulant dans une conduite en mesurant les temps de propagation respectifs de signaux ultrasonores émis en sens inverse l'un de l'autre entre deux transducteurs ultrasonores situés en des points espacés dans la direction de l'écoulement du fluide.

Dans le domaine de la mesure d'un débit d'eau chaude, on connaît d'après le document WO 86/02722 une méthode qui consiste à émettre simultanément à partir de chaque transducteur un signal ultrasonore en direction de l'autre transducteur, les deux signaux se propageant ainsi en sens inverse l'un de l'autre. En raison de la présence de l'écoulement, le temps de propagation T2 du signal émis en sens contraire de l'écoulement est plus élevé que celui, T1, émis dans le sens de l'écoulement.

La mesure des deux temps de propagation T1, T2 permet d'en déduire le débit d'eau chaude suivant la formule Q = K(T2-T1)/C où K est un terme tenant compte de la géométrie du compteur et C est un terme correcteur lié à la vitesse de propagation du son dans l'eau.

Or, cette méthode présente un inconvénient majeur. En effet, lorsque l'un des transducteurs vient d'être excité, il continue à émettre un signal alors qu'il reçoit le signal en provenance de l'autre transducteur. Lorsque la température de l'eau varie, des dérives ont été constatées et l'on observe des déphasages parasites supplémentaires dans les signaux ultrasonores reçus.

Pour s'affranchir de ce problème, il est nécessaire d'effectuer des mesures de la température et de corriger les mesures de débit en fonction des fluctuations de la température ce qui complique la méthode de mesure.

En outre, on connaît d'autres méthodes de mesure telles que, par exemple, celle décrite dans le document EP 0426309 et suivant laquelle des signaux acoustiques comportant une inversion de phase sont émis consécutivement en sens inverse l'un de l'autre dans un fluide en écoulement. Le temps de propagation de chacun de ces signaux est mesuré en détectant sur chacun des signaux acoustiques reçus l'instant correspondant à l'apparition de l'inversion de phase, par rapport à une référence temporelle qui est liée au signal d'émission considéré.

La détection de cet instant est réalisée au moyen d'un détecteur de phase instantané mais n'est pas précise.

Pour chacun des signaux acoustiques, à cette mesure de temps va être associée une mesure du déphasage acoustique induit dans le signal acoustique considéré du fait de la propagation de ce signal dans l'écoulement.

La mesure du déphasage acoustique est effectuée en échantillonnant le signal reçu dans huit capacités, en convertissant numériquement ledit signal échantillonné et en réalisant une détection synchrone du signal ainsi numérisé.

Or, cette méthode de mesure, du fait de l'échantillonnage, introduit un bruit supplémentaire sur les valeurs échantillonnées du signal et donc sur la mesure elle même.

En outre, cette méthode est complexe puisqu'elle nécessite une mesure de temps de propagation et une mesure de déphasage acoustique pour chaque tir effectué dans un sens de propagation.

Par conséquent, il serait intéressant de trouver un procédé de mesure qui n'apporte pas de bruit supplémentaire à la mesure et qui soit plus simple à mettre en oeuvre que dans l'art antérieur.

La présente invention a ainsi pour objet un procédé de mesure d'un débit de fluide en écoulement consistant à transmettre consécutivement entre deux transducteurs ultrasonores espacés dans la direction de l'écoulement du fluide respectivement deux signaux ultrasonores qui se propagent dans des sens opposés, chaque transducteur recevant respectivement un signal ultrasonore SIG1, SIG2 caractérisé en ce que ledit procédé consiste à : former n signaux d'horloge $CK_i$, i = 1 à n et n $\geq$ 4, comportant des transitions, déphasés entre eux de $2\pi/n$, en relation de phase fixe par rapport à un signal d'excitation des transducteurs et de même fréquence que ce signal, choisir une partie caractéristique d'une période d'un premier signal reçu SIGI dans un sens de propagation, sélectionner la première transition du signal d'horloge qui se produit immédiatement après l'apparition de ladite partie caractéristique, mémoriser ce signal d'horloge appelé CLS, déterminer le temps tl correspondant à la somme sur un nombre entier m de périodes consécutives de chacun des temps écoulés entre l'apparition de la partie caractéristique de chacune des m périodes du signal SIG1 et l'apparition de la première transition du signal CLS qui suit, repérer sur m périodes consécutives d'un second signal reçu SIG2 dans le sens de propagation opposé la même partie caractéristique, déterminer le temps t2 correspondant à la somme sur ces m périodes de chacun des temps écoulés entre l'apparition de la partie caractéristique de chacune des m périodes du signal SIG2 et l'apparition de la première transition du signal CLS qui suit, former la différence |t2-t1| et en déduire le débit de fluide Q qui est proportionnel à |t2-t1|.

La création des n signaux d'horloge $CK_i$ intermédiaires fournit une référence temporelle "variable", par opposition aux références utilisées dans les méthodes connues de mesure ultrasonore du débit d'un fluide en écoulement, car, dès lors que la résolution souhaitée sur la mesure de temps est obtenue, on recherche une autre référence temporelle plus adaptée.

Le fait de créer cette référence temporelle à partir des signaux d'horloge n'introduit pas de bruit supplémentaire comme le ferait un convertisseur analogique/numérique.

En outre, ce procédé est simple puisqu'il n'y a pas d'échantillonnage ni d'étape de détection synchrone et peut donc être mis en oeuvre avec des moyens analogiques simples, ce qui n'est pas le cas des méthodes de l'art antérieur.

Par ailleurs, un circuit électronique dépourvu de convertisseur analogique numérique est plus facile à intégrer au niveau d'un circuit intégré à application spécifique (ASIC).

Le fait d'utiliser cette référence temporelle "variable" permet d'obtenir avec plus de précision et plus rapidement la résolution recherchée.

En effet, avec n signaux $CK_i$ déphasés de $2\pi/_n$, la résolution sera de $T/_n$ ($T$ est la résolution obtenue avec l'horloge à partir de laquelle peuvent être formés les n signaux) et l'on pourra ainsi obtenir une mesure du temps qui s'est écoulé entre l'apparition de la partie caractéristique de chacune des m périodes dudit signal et l'apparition de la première transition du signal d'horloge sélectionné avec une meilleure résolution que dans l'art antérieur.

Étant donné que la résolution augmente lorsque le nombre de mesures augmente (la loi est en $1/\sqrt{N}$ où N est le nombre de mesures), on comprend que l'introduction de cette référence temporelle "variable" permet d'accroître d'emblée la résolution, nécessitant par là même moins de mesures pour aboutir à la résolution recherchée.

Avantageusement, cette méthode permet donc de réduire la consommation énergétique pour obtenir une mesure ultrasonore du débit de fluide avec la même résolution que dans les méthodes de l'art antérieur.

En outre, il convient de remarquer que lorsqu'on utilise des fréquences d'émission d'ondes acoustiques de l'ordre de 1MHz, par exemple pour un fluide tel que l'eau, les méthodes de l'art antérieur telles que celle décrite dans le document EP 0 426 309 sont très dispendieuses en énergie étant donné qu'il faut un convertisseur analogique numérique qui puisse échantillonner un signal à 1MHz et présentant donc également un coût élevé ce qui n'est pas le cas de l'invention.

Le nombre entier m de périodes peut être égal à 1 ou prendre d'autres valeurs. Lorsque m est différent de 1, la période sur laquelle est choisie la partie caractéristique peut correspondre à la première des m périodes consécutives ou bien peut précéder ces m périodes.

Selon l'invention, les signaux reçus SIG1 et SIG2 peuvent être conditionnés sous la forme de créneaux et, dans ce cas, la partie caractéristique des périodes des signaux reçus correspond au front montant ou descendant de chaque créneau. Selon l'invention, les signaux d'horloge peuvent se présenter sous la forme de créneaux et, dans ce cas, la première transition du signal d'horloge sélectionné est un front montant ou descendant.

Selon le procédé de l'invention, on forme les différences respectives SIG1-CLS et SIG2-CLS entre les signaux afin d'obtenir les signaux respectifs IEX1 et IEX2 qui vont permettre de déterminer les temps respectifs $t_1$ et $t_2$.

Les signaux IEX1 et IEX2 peuvent se présenter sous la forme de créneaux et le procédé selon l'invention consiste à expanser la durée cumulée de tous les créneaux pour déterminer les temps respectifs $t_1$ et $t_2$.

Par exemple, le signal d'horloge $CK_1$ est en phase avec le signal d'excitation des transducteurs.

Selon un premier mode de réalisation, on forme quatre signaux d'horloge. Selon un deuxième mode de réalisation, on forme huit signaux d'horloge.

Avantageusement, à partir de chaque signal reçu, on forme un signal SIGS déphasé par rapport aux signaux d'horloge afin d'éviter une simultanéité desdits signaux.

Par exemple, le signal SIGS est déphasé de $\pi/_n$.

La présente invention a également pour objet un dispositif de mesure d'un débit de fluide en écoulement comprenant :

- au moins deux transducteurs ultrasonores espacés dans la direction de l'écoulement du fluide,
- des moyens de formation d'un signal d'excitation de ces transducteurs,
- des moyens de réception de deux signaux ultrasonores SIG1 et SIG2 émis respectivement par lesdits transducteurs dans des sens opposés et consécutivement, caractérisé en ce que ledit dispositif comprend en outre :
- des moyens de formation de n signaux d'horloge CKi, i = 1 à n et n≥4, qui comportent des transitions, sont déphasés entre eux de $2\pi/_n$, sont en relation de phase fixe par rapport au signal d'excitation et de même fréquence que ce signal,
- des moyens d'identification d'une partie caractéristique d'une période du premier signal reçu SIG1,
- des moyens de sélection de la première transition du signal d'horloge CKi qui se produit immédiatement après l'apparition de ladite partie caractéristique,
- des moyens de mémorisation de ce signal d'horloge appelé CLS,
- des moyens de détermination du temps tl correspondant à la somme sur un nombre entier m de périodes consécutives des temps écoulés entre l'apparition de la partie caractéristique de chacune des m périodes du signal SIG1 et l'apparition de la première transition du signal CLS qui suit,

- des moyens d'identification de la même partie caractéristique sur m périodes consécutives du second signal reçu SIG2,
- des moyens de détermination du temps t2 correspondant à la somme sur ces m périodes des temps écoulés entre l'apparition de la partie caractéristique de chacune des m périodes du signal SIG2 et l'apparition de la première transition du signal CLS qui suit,
- des moyens de formation de la différence |t2-t1| et de déduction du débit de fluide Q qui est proportionnel à t2-t1.

Ce dispositif peut être réalisé avec des moyens analogiques simples comme notamment des bascules de type D ou RS et permet donc de ne pas avoir besoin de convertisseur analogique numérique ni de plusieurs capacités pour stocker les valeurs échantillonnées.

Les moyens de formation des signaux d'horloge $CK_i$ peuvent comprendre un oscillateur à quartz suivi de $n/_2$ bascules de type D formant un diviseur et permettant ainsi d'obtenir des signaux CKi déphasés entre eux de $2\pi/_n$. Les moyens de sélection de la première transition du signal d'horloge peuvent comprendre n bascules de type D, dites de sélection, dont chaque entrée D est reliée au signal commun reçu SIG1 ou SIG2, chaque entrée d'horloge CK recevant un signal d'horloge CKi différent d'une bascule à l'autre et qui peuvent être activées par une entrée RAZ de telle sorte que lorsque l'entrée RAZ des bascule est à "1" et lorsque le signal commun est à "1", lesdites bascules sont sensibles aux signaux CKi.

Les moyens de sélection de la première transition du signal d'horloge peuvent également comprendre n portes logiques recevant chacune sur une entrée le signal commun reçu SIG1 ou SIG2 et n circuits monostables recevant chacun en entrée un signal d'horloge $CK_i$ différent et dont la sortie est envoyée respectivement sur l'une des autres entrées des n portes logiques.

Les moyens de mémorisation du signal d'horloge CLS peuvent comprendre, d'une part, n bascules de type D, dites de mémorisation, recevant chacune en tant qu'entrée d'horloge CK la sortie Q d'une bascule de sélection, et, d'autre part, une porte logique "NON ET" à n entrées reliées chacune à la sortie $\overline{Q}$ de chaque bascule de mémorisation, l'entrée D de ces bascules de mémorisation étant à "1" en permanence et le premier signal reçu en entrée d'horloge CK d'une des bascules activant la fonction de mémorisation de cette dernière en faisant basculer la sortie Q de ladite bascule à 1 et la sortie $\overline{Q}$ à 0, activant ainsi un circuit de verrouillage du signal commun reçu $SIG_1$ ou $SIG_2$.

Selon le dispositif de l'invention n portes logiques "NON ET" reçoivent sur chacune de leurs entrées un signal d'horloge $CK_i$ et la sortie Q de la bascule de mémorisation correspondante, la sortie de chacune de ces portes étant reliée à l'une des entrées de la porte logique "NON ET" à n entrées, l'une des n portes logiques libérant le signal d'horloge $CK_i$ associé lorsque la fonction de mémorisation de la bascule de mémorisation correspondante est activée.

D'autres caractéristiques et avantages apparaîtront au cours de la description qui va suivre donnée à titre d'exemple non limitatif, faite en référence aux dessins annexés et sur lesquels :

- la figure 1 représente la disposition des transducteurs ultrasonores par rapport à l'écoulement du fluide selon un mode de réalisation,
- la figure 2 représente une autre disposition des transducteurs ultrasonores par rapport à l'écoulement du fluide,
- la figure 3 est une vue schématique simplifiée d'un séquenceur utilisé dans le dispositif selon l'invention,
- la figure 4 est une vue schématique d'une partie du dispositif selon l'invention comprenant les blocs d'émission des signaux ultrasonores, le bloc de commutation des transducteurs et le bloc de conditionnement des signaux ultrasonores reçus,
- la figure 5a représente le signal $SIG_1$ ($SIG_2$) formé à partir du signal ultrasonore reçu,
- la figure 5b illustre les étapes d'émission et de réception des signaux ultrasonores,
- la figure 6 est une vue schématique d'une partie du dispositif selon l'invention comprenant le bloc de formation des signaux d'horloge $CK_i$ (i = 1 à 4) ainsi que les blocs de sélection et de mémorisation du signal d'horloge CLS,
- la figure 7 représente l'allure des quatre signaux d'horloge $CK_i$ les uns par rapport aux autres,
- la figure 8a est une variante de la partie du dispositif de la figure 6 qui sélectionne le signal d'horloge CLS,
- la figure 8b est une variante de la partie du dispositif de la figure 6 qui représente les blocs de sélection et de mémorisation du signal d'horloge CLS,
- la figure 8c représente l'allure des principaux signaux utilisés en fonction du temps,
- la figure 9 est une vue schématique d'une partie du dispositif selon l'invention comprenant le bloc de génération des signaux $IEX_1$ et $IEX_2$ ($SIG_1$-CLS et $SIG_2$-CLS) simplifié.
- la figure 10 est un schéma illustrant l'étape de génération des signaux $IEX_1$ et $IEX_2$,
- la figure 11 représente l'allure des signaux $SIG_1$, CLS et $IEX_1$,
- la figure 12a est une vue schématique illustrant le principe de l'expansion de temps,
- la figure 12b est une vue schématique simplifiée d'un expanseur de temps.
- la figure 13 est une vue schématique d'une partie du dispositif selon l'invention comprenant un expanseur de temps,

- la figure 14 représente les différentes signaux $SIG_1$, $SIG_2$, $IEX_1$ et $IEX_2$,
- la figure 15 est une vue schématique de la partie du dispositif représenté à la figure 6 selon un deuxième mode de réalisation de l'invention,
- la figure 16 représente l'allure des huit signaux d'horloge $CK_i$ les uns par rapport aux autres,
- la figure 17 représente l'allure des signaux $CK_1$, $CK_3$, C4M, SIG1, SIG1S et $IEX_1$.

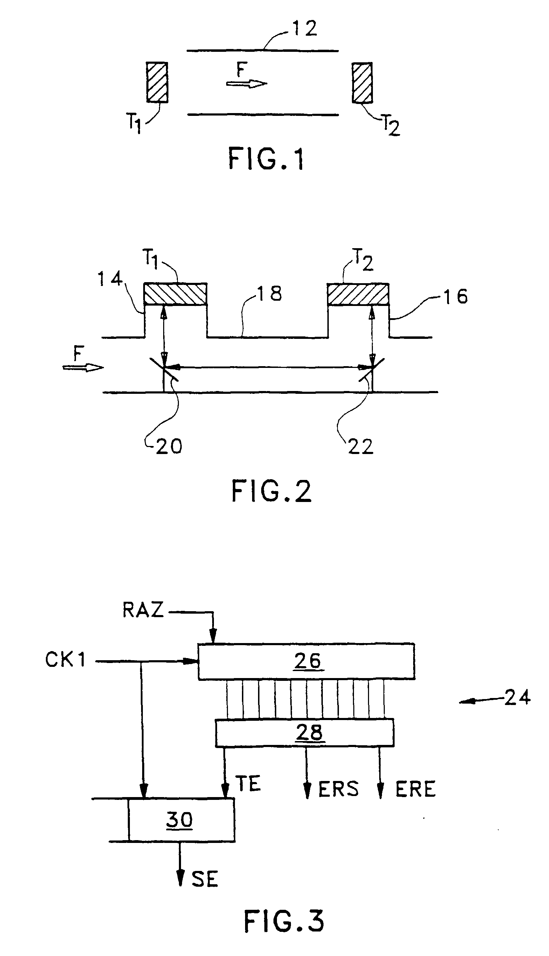

Un dispositif de mesure du débit d'un fluide en écoulement, tel que de l'eau chaude, est représenté aux figures 1, 2, 4, 7 et 11 et est désigné par la référence générale notée 10.

Comme représenté partiellement à la figure 1, le dispositif selon l'invention comprend deux transducteurs ultrasonores $T_1$ et $T_2$ disposés dans l'écoulement et espacés dans la direction de l'écoulement du fluide afin de pouvoir recueillir une information sur la vitesse du fluide.

Sur la figure 1, les transducteurs $T_1$ et $T_2$ sont placés en face l'un de l'autre aux deux extrémités opposées d'un tube de mesure 12 dans lequel s'écoule le fluide selon la direction indiquée par la flèche "F".

Un autre exemple de disposition des transducteurs $T_1$ et $T_2$ est représenté à la figure 2 sur laquelle lesdits transducteurs sont placés au fond de logements 14 et 16 perpendiculaires à la direction d'écoulement du fluide qui est indiquée par la flèche "F".

Le fluide s'écoule dans un tube de mesure 18 dans lequel sont montés deux miroirs 20 et 22 destinés à réfléchir les signaux ultrasonores comme indiqué sur la figure 2.

Les transducteurs ultrasonores $T_1$ et $T_2$ sont excités par un signal d'excitation qui provient d'un séquenceur 24 représenté de manière simplifiée à la figure 3. Ce séquenceur comprend un compteur 16 bits, 26 et un décodeur 28 connecté au compteur ainsi qu'un bloc 30 constitué de plusieurs portes logiques.

Un signal d'horloge à 1MHz, $CK_1$, issu d'un signal d'horloge à 4MHz alimente le compteur 26 et le bloc 30 et ce bloc reçoit également un signal TE en provenance du décodeur 28 et qui va permettre la transmission d'un signal ultrasonore. Le bloc 30 délivre en sortie un signal d'excitation SE qui joue le rôle d'un signal pilote. Le compteur 26 est activé lorsque le signal RAZ est délivré par une horloge dite de veille et qui n'est pas représentée sur la figure 3.

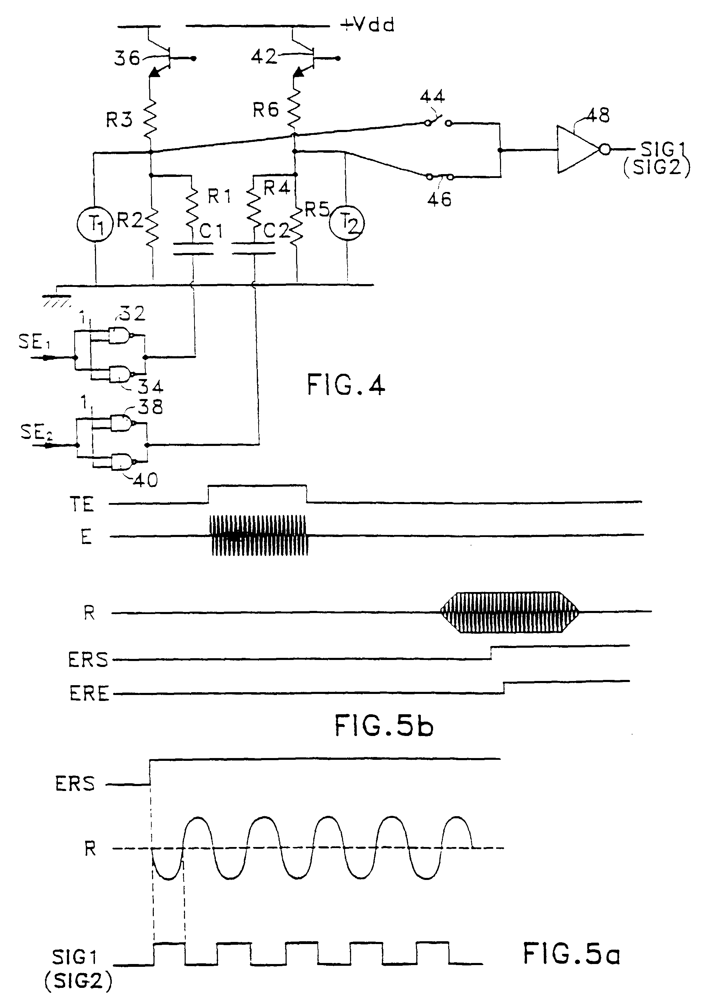

Comme représenté sur la figure 4, le signal SE, noté $SE_1$ (ce signal est destiné à exciter le transducteur $T_1$), est envoyé sur les deux entrées respectives de deux portes logiques "NON ET" 32 et 34 montées en parallèle afin de réduire l'impédance interne de ce montage.

L'autre entrée de chacune de ces portes logiques "NON ET" est reliée à un signal logique de valeur 1. Ces portes peuvent être remplacées par des inverseurs. La sortie de ces deux portes logiques 32 et 34 est reliée à un condensateur Cl monté en série avec une résistance $R_1$, la résistance $R_1$ étant reliée à une autre résistance $R_2$ qui est montée aux deux bornes du transducteur $T_1$.

La borne du transducteur $T_1$ qui est reliée aux résistances $R_1$ et $R_2$ est également reliée à une résistance $R_3$ recevant un courant électrique provenant du collecteur d'un transistor de commutation 36.

Le transistor PNP 36 est alimenté par une tension $V_{dd}$ sur son émetteur. Le montage en série des résistances $R_2$ et $R_3$ permet d'obtenir une tension stable de polarisation des transducteurs de valeur égale à $V_{dd/2}$.

Le condensateur $C_1$ isole la tension $V_{dd}$ de l'entrée (côté signal SE) afin d'éviter de perturber le potentiel du montage diviseur $R_2$ et $R_3$ lorsque, notamment, le signal $SE_1$ est au niveau de repos. Ceci permet également d'éviter une surconsommation.

La résistance $R_1$ isole le transducteur $T_1$ par rapport au signal d'entrée afin d'assurer la compatibilité entre le signal rectangulaire $\overline{SE_1}$ et le transducteur fortement capacitif et permet d'assurer un meilleur contrôle de l'impédance d'émission.

Un montage symétrique est réalisé pour le transducteur $T_2$ qui est excité par le signal SE noté $SE_2$ avec des portes logiques "NON ET" 38. 40, des résistances $R_4$, $R_5$, $R_6$, un condensateur $C_2$ et un transistor 42.

Étant donné que les deux branches des montages symétriques ne sont pas reliées entre elles, un bon découplage est ainsi assuré entre les deux transducteurs. Lorsque le transducteur $T_1$ émet un signal ultrasonore consécutivement à un signal d'excitation de fréquence égale à 1MHz. l'interrupteur 44 du bloc de commutation est ouvert et l'interrupteur 46 relié au transducteur $T_2$ est fermé.

Le signal ultrasonore d'émission, représenté par la lettre E sur la figure 5, a une durée par exemple égale à 40 μs.

Environ 80 ms après l'instant de début du signal d'émission, le signal ultrasonore est reçu par le transducteur $T_2$ (Fig.5b).

Le signal reçu, représenté par la lettre R sur les figures 5a et 5b est conditionné dans un inverseur 48 (Fig.4) par exemple un inverseur CMOS de type HCO4 contenant 3 inverseurs en cascade et qui délivre en sortie un signal $SIG_1$ se présentant sous la forme de créneaux ainsi que représenté à la figure 5a.

A titre de variante le conditionnement peut s'effectuer avec un comparateur différentiel dont une entrée reçoit le signal issu du bloc de commutation et d'autre entrée reçoit un signal de référence issu d'un diviseur spécialisé ou d'un réseau RC définissant la valeur moyenne du signal.

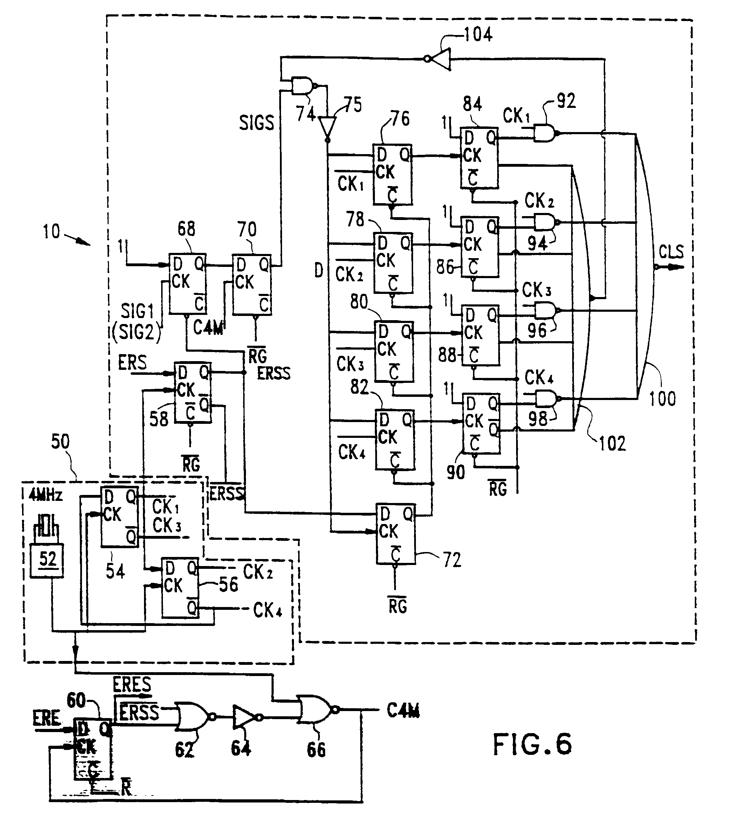

Comme représenté sur la figure 6, le dispositif 10 comprend des moyens 50 de formation de quatre si-

gnaux d'horloge CK$_i$, avec i = 1 à 4.

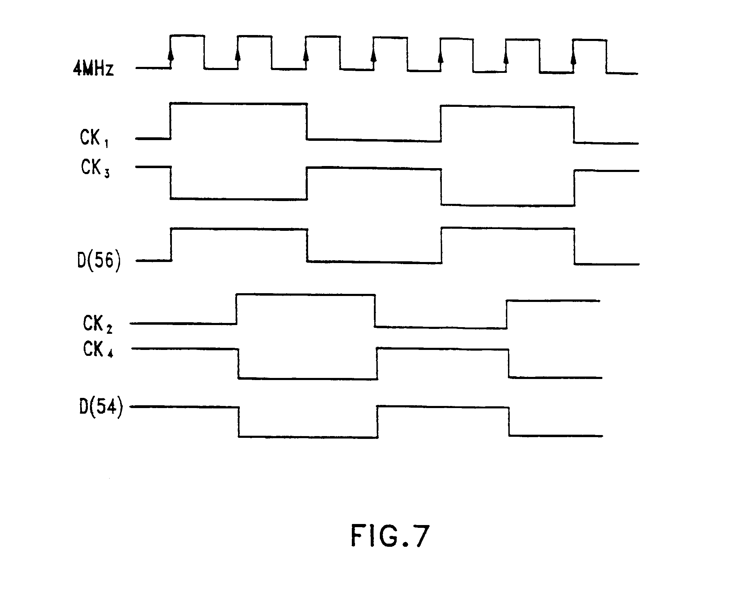

Ces moyens comprennent un oscillateur à quartz 52 de fréquence égale à 4MHz. Cet oscillateur délivre un signal d'horloge qui attaque les entrées d'horloge CK de deux bascules 54, 56 de type D qui forment un diviseur. L'allure du signal d'horloge de fréquence égale à 4MHz est représentée à la figure 7.

La sortie $\overline{Q}$ de la bascule 56 est connectée à l'entrée D de la bascule 54 et la sortie Q de la bascule 54 est reliée à l'entrée D de la bascule 56.

Comme représenté sur la figure 7, en supposant que le signal CK$_2$ est à 0 et le signal CK4 est à 1, lorsqu'un front montant du signal d'horloge à 4MHz se présente, le signal d'horloge CK$_1$ délivré par la sortie Q de la bascule 54 passe à 1 et l'entrée D de la bascule 56 prend donc également la valeur 1.

Le signal d'horloge CK$_3$ délivré par la sortie $\overline{Q}$ de la bascule 54 passe donc à 0. Sur le front montant suivant du signal d'horloge à 4MHz, le signal d'horloge CK$_2$ délivré par la sortie Q de la bascule 56 passe à 1.

Ainsi, le signal d'horloge CK$_4$ délivré par la sortie $\overline{Q}$ de la bascule 56 passe à 0 et l'entrée D de la bascule 54 prend donc également la valeur 0.

Lors du prochain front montant du signal d'horloge à 4MHz, le signal d'horloge CK$_1$ retombe à 0, tandis que le signal CK$_3$ passe à 1 et ainsi l'entrée D de la bascule 56 passe également à 0.

Lorsque le front montant suivant du signal d'horloge à 4MHz se présente, le signal d'horloge CK$_2$ délivré par la sortie Q de la bascule 56 passe à 0 et le signal CK$_4$ passe donc à 1 ce qui fait passer à 1 l'entrée D de la bascule 54. Lors d'un autre front montant du signal d'horloge à 4MHz, le signal d'horloge CK$_1$ passe à 1. le signal d'horloge CK$_3$ passe donc à 0 et l'entrée D de la bascule 56 passe à 1. Un front montant suivant du signal d'horloge à 4MHz fait passer à 1 le signal d'horloge CK$_2$, et donc fait passer à 0 le signal d'horloge CK$_4$ ainsi que l'entrée D de la bascule 54.

Ainsi, les quatre signaux d'horloge CK$_1$, CK$_2$, CK$_3$ et CK$_4$ formés sont représentés en gras sur la figure 7.

Ces signaux ont même fréquence que les signaux d'excitation SE$_1$ et SE$_2$ des transducteurs (1MHz) qui sont créés à partir du signal d'horloge CK$_1$. Les signaux sont déphasés entre eux de $\pi/2$ et sont dans une relation de phase fixe par rapport aux signaux d'excitation des transducteurs.

En outre, ces signaux présentent des transitions entre une valeur logique 0 et une valeur logique 1.

Une variante du montage 50 consiste à former un signal d'horloge CK$_1$ à 1MHz à partir d'un signal d'horloge à 2MHz généré par un oscillateur et au moyen d'une bascule de type D.

Le signal CK$_2$ est alors formé à partir du signal CK1 en créant un retard artificiel par exemple au moyen d'un circuit monostable (ou temporisateur), et les signaux CK$_3$ et CK$_4$ sont obtenus facilement à partir des signaux CK$_1$ et CK$_2$ par inversion de ceux-ci.

Comme représenté à la figure 3, un signal ERS dit de synchronisation est généré par le décodeur 28 du séquenceur 26 et son allure est représentée sur les figures 5 et 5a.

Sa valeur logique est à 0 et au bout d'un temps égal à 95 ms, sa valeur passe à 1 lorsque le signal reçu se situe dans sa partie centrale qui est moins perturbée que le début ou la fin dudit signal reçu. Ce signal déclenche le début de la phase de sélection d'un signal d'horloge CK$_i$.

En référence à la figure 6, le signal ERS est envoyé sur l'entrée D d'une bascule 58 de type D. Cette bascule permet de générer à sa sortie Q un signal ERSS qui correspond au signal ERS synchronisé avec le signal d'horloge CK$_1$ qui est envoyé sur l'entrée d'horloge CK de la bascule 58.

Le signal CK1 a été choisi arbitrairement.

Un signal ERE est généré par le décodeur 28 du séquenceur 26 (Fig.3) et son allure est représentée sur la figure 5b.

Sa valeur logique est à 0 et, 2 ms après le passage à 1 du signal ERS, sa valeur passe à 1. Ce signal va déclencher le début de la phase de mesure.

En référence à la figure 6, le signal ERE est envoyé sur l'entrée D d'une bascule 60 de type D dont l'entrée $\overline{C}$ ("clear") de remise à zéro est reliée à un signal R qui la réinitialise au début d'une mesure.

La sortie Q de la bascule 60 est connectée à l'une des entrées d'une porte logique 62 de type "NON OU", l'autre entrée recevant le signal $\overline{ERSS}$.

La sortie de cette porte 62 est reliée à un inverseur 64 dont la sortie est connectée à l'une des entrées d'une porte logique 66 de type "NON OU", l'autre entrée recevant le signal d'horloge à 4MHz.

En sortie de cette porte 66, un signal C4M de fréquence égale à 4MHz est délivré. Le signal C4M est réinjecté sur l'entrée d'horloge CK de la bascule 60. Ce signal C4M est déclenché par le passage de $\overline{ERSS}$ à zéro et est supprimé lors de l'apparition du signal ERE synchronisé par ce même signal C4M.

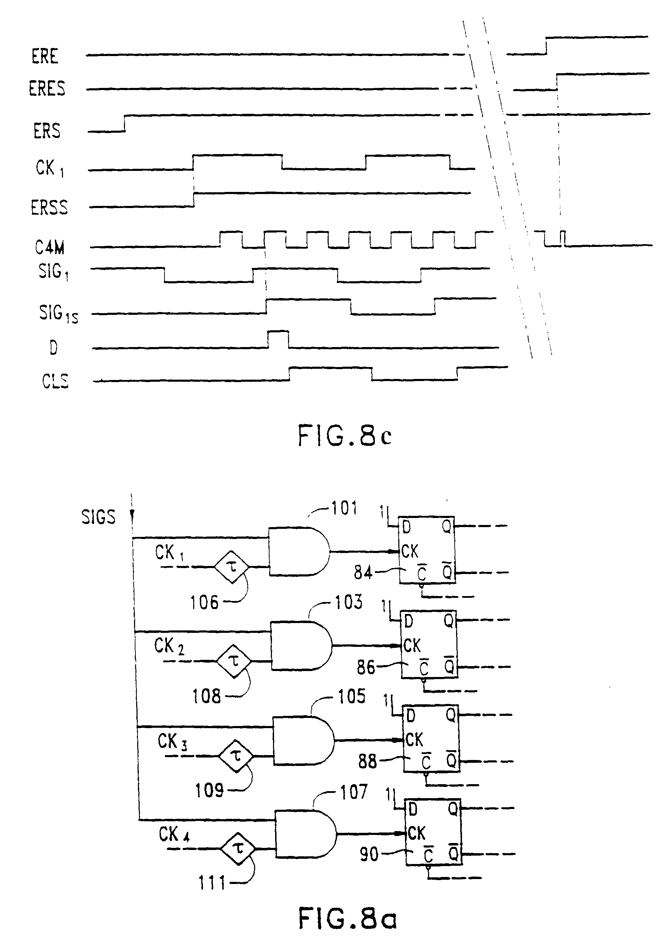

Il convient de noter que cette logique limite la présence du signal C4M notamment sur les entrées CK des bascules 60 et 70, ce qui minimise la consommation du circuit (Fig.8c).

La sortie Q de la bascule 60 fournit un signal ERES qui correspond au signal ERE synchronisé avec le signal C4M et dont l'allure est représentée sur la figure 8c. Ce signal sert à valider le bloc de mesure qui sera décrit ultérieurement. Le signal synchronisé ERSS est envoyé sur l'entrée $\overline{C}$ ("clear") de remise à zéro d'une bascule 68 de type D. Le signal SIG (SIG1 ou SIG2) est envoyé sur l'entrée d'horloge CK de cette bascule dont l'entrée D est à 1.

La sortie Q de la bascule 68 est reliée à l'entrée D d'une bascule 70 de type D. Le signal C4M est envoyé sur l'entrée d'horloge CK de cette bascule 70 et l'entrée $\overline{C}$ ("clear") de remise à zéro est reliée à un signal $\overline{RG}$ qui a pour fonction d'initialiser cette bascule au début d'un cycle complet de mesures qui est constitué d'une émission de signal ultrasonore dans le sens d'écoulement du fluide, dite "tir" aval, et d'une émission en sens contraire, dite "tir" amont.

Lorsque le signal ERSS en sortie Q de la bascule 58 passe à 1, le premier front montant du signal conditionné $SIG_1$ (ou $SIG_2$) fait passer à 1 la sortie Q de la bascule 68 autorisant ainsi le passage à 1 de la sonie Q de la bascule 70 lors du premier front montant du signal C4M.

Le signal SIG1S ainsi formé correspond au signal $SIG_1$ synchronisé avec le signal C4M.

Pour obtenir le signal SIG1S déphasé par rapport au signal SIG1, il est possible de remplacer la bascule 70 par quatre inverseurs logiques en série disposés en sortie Q de la bascule 68.

Le signal ERSS est également envoyé sur l'entrée D d'une bascule 72 de type D. L'entrée $\overline{C}$ ("clear") de remise à zéro de la bascule 72 reçoit le signal précèdent $\overline{RG}$.

L'entrée d'horloge CK de la bascule 72 est reliée au signal SIG1S.

Le signal commun SIG1S est également envoyé sur l'une des entrées d'une porte logique 74 du type "NON ET" dont la sortie est dirigée sur un inverseur 75 qui envoie le signal SIG1S sur l'entrée D de quatre bascules 76, 78, 80, 82 de type D. L'entrée $\overline{C}$ ("clear") de remise à zéro de chaque bascule est connectée à la sortie Q de la bascule 72.

Lorsque le signal ERSS est à 1, le premier front montant du signal SIG1S vient déclencher la bascule 72 et fait passer à 1 la sortie Q de celle-ci.

Le premier front montant de SIG1S apparaissant après le passage d'ERSS à 1 libère l'entrée $\overline{C}$ ("clear") de remise à zéro des quatre bascules 76, 78, 80, 82. Quatre autres bascules 84, 86, 88, 90 de type D reçoivent sur leur entrée d'horloge CK respectivement les sorties Q des bascules 76, 78, 80, 82.

L'entrée D de ces bascules 84, 86, 88, 90 est mise à 1 en permanence et l'entrée $\overline{C}$ ("clear") de remise à zéro de celles-ci est reliée au signal commun d'initialisation $\overline{RG}$.

Les sorties $\overline{Q}$ des bascules 84 à 90 sont connectées respectivement à l'une des entrées de quatre portes logiques 92, 94, 96, 98 de type "NON ET", l'autre entrée de ces portes recevant respectivement les signaux d'horloge $CK_1$, $CK_2$, $CK_3$, $CK_4$. Les sorties des portes logiques 92 à 98 sont connectées aux quatre entrées d'une porte logique 100 de type "NON ET".

Les sorties $\overline{Q}$ des bascules 84 à 90, quant à elles, sont reliées aux quatre entrées d'une porte logique 102 de type "NON ET" dont la sortie est inversée par un inverseur logique 104 et est ensuite réinjectée sur la seconde entrée de la porte logique 74.

Dès qu'un front montant du signal SIG1S est identifié (un tel front constitue en quelque sorte une partie caractéristique du signal) par les quatre bascules 76, 78, 80, 82 celles-ci sont activées et reçoivent sur leurs entrées d'horloge CK respectivement les signaux d'horloge $CK_1$, $CK_2$, $CK_3$, $CK_4$.

Le signal commun $\overline{RG}$ est à 1 (initialisation en début de mesure), les bascules 84 à 90 sont rendues actives et sont donc sensibles aux sorties Q des bascules 76, 78, 80, 82.

La première transition ou front montant du premier signal d'horloge qui arrive immédiatement après l'apparition du front montant du signal SIG1S déclenche la sortie Q de la bascule recevant le signal d'horloge concerné.

Les bascules 76, 78, 80, 82 permettent l'identification du front montant de SIG1S et la sélection de la première transition du signal d'horloge $CK_i$ qui se produit immédiatement après l'apparition de ce front montant. Par exemple, si $CK_3$ est le signal d'horloge sélectionné, parce que temporellement le plus proche de SIG1S, la sélection de ce signal par la bascule 80 fait passer à 1 la sortie Q de cette bascule ce qui fait également passer à 1 la sortie Q de la bascule 88 correspondante.

Les sorties Q des autres bascules 76, 78 et 82 sont toujours à 0.

La sortie Q de la bascule 88 est alors à 0 et fait donc passer à 1 la sortie de la porte logique 102. Le signal inversé arrivant sur la seconde entrée de la porte logique 74 est alors à 0 ce qui verrouille la porte et fait passer à 0 le signal commun issu de cette porte et reliant les entrées D des bascules 76 à 82. De cette manière les bascules 76 à 82 deviennent insensibles aux signaux d'horloge $CK_i$, et les sorties Q de ces bascules restent à 0.

Cela permet d'éviter que d'autres signaux d'horloges puissent être sélectionnés, et de cette façon, le signal d'horloge sélectionné $CK_3$ est mémorisé.

La sortie Q de la bascule 88 étant à 1, le signal $CK_3$ est libéré par la porte logique 96 et vient attaquer l'une des quatre entrées de la porte logique 100. Les autres entrées de cette porte 100 sont à 1 étant donné l'état 0 des sorties Q des bascules 84, 86 et 90, et par conséquent, la sortie de la porte 100 délivre le signal $CK_3$ qui sera nommé par la suite CLS. Le signal CLS correspond au signal d'horloge sélectionné par le montage qui vient d'être décrit.

Étant donné que le signal $SIG_1$ a été synchronisé par le signal C4M cela permet d'éviter que les fronts des signaux SIGi et CLS apparaissent simultanément.

A titre de variante représentée à la figure 8a, les fonctions d'identification du front montant d'une période du signal SIG1S et de sélection de la première transition (front montant) du signal d'horloge $CK_i$ qui se produit immédiatement après l'apparition du front montant de la période du signal SIG1S peuvent également être réalisées de la manière suivante : le signal commun SIG1S est envoyé sur chacune des deux entrées de quatre portes logiques "ET" 101, 103, 105, 107 et les signaux CKi attaquent chacun respectivement l'entrée d'un circuit monostable 106, 108, 109, 111 dont la sortie est reliée à l'autre des deux entrées des quatre portes logiques "ET" précédentes 101, 103, 105, 107. Les sorties des quatre portes logiques "ET" sont envoyées sur les entrées d'horloge CK respectives des quatre bascules de mémorisation 84, 86, 88 et 90.

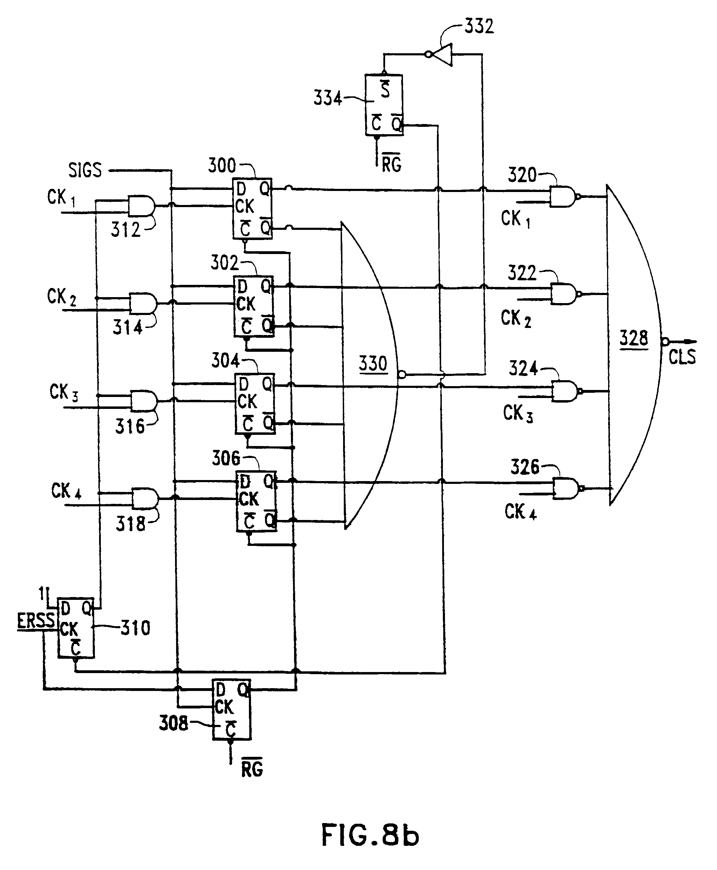

La figure 8b représente une variante de réalisation du dispositif de la figure 6 selon laquelle un étage de bascules D 84-90 a été supprimé. Sur cette figure, seuls sont représentés les éléments qui ont changé par rapport à la figure 6.

Le signal commun SIG1S ou SIG2S issu de la sortie Q de la bascule 70 est envoyé sur l'entrée D de quatre bascules de type D 300, 302, 304, 306 et sur l'entrée d'horloge CK d'une autre bascule de type D 308 dont la sortie Q est reliée à l'entrée $\overline{C}$ ("clear") de remise à zéro desdites bascules 300-306.

Une bascule de type D 310 reçoit sur son entrée d'horloge le signal ERSS, son entrée D est à 1 en permanence et sa sortie Q est envoyée respectivement sur l'une des deux entrées de quatre portes logiques "ET" 312, 314, 316 318, l'autre entrée de ces portes recevant respectivement les signaux d'horloge $CK_1$, $CK_2$, $CK_3$ et $CK_4$.

Ainsi, lorsque le signal ERSS passe à 1, la sortie Q de la bascule 310 passe à 1 ce qui libère les signaux d'horloge $CK_i$. Une demi-période du signal C4M plus tard. le front montant du signal SIG1S se présente sur les entrées D des bascules 300-306 et active en même temps les entrées $\overline{C}$ ("clear") de remise à zéro de ces bascules par l'intermédiaire de la bascule 308.

Le premier front montant du signal d'horloge $CK_i$, par exemple $CK_3$, qui suit immédiatement le front montant du signal SIG1S active la bascule D correspondante 304 dont la sortie Q passe à 1.

Étant donné que chaque sortie Q d'une bascule D 300-306 est envoyé sur une entrée d'une porte logique "NON ET" respectivement 320, 322, 324, 326 et que l'autre entrée de chaque porte reçoit respectivement un signal $CK_i$, i = 1 à 4, différent, le passage à 1 de la sortie Q de la bascule 304 libère le signal $CK_3$ de la porte logique 324 qui attaque l'une des quatre entrées d'une porte logique "NON ET" 328.

Les trois autres entrées de la porte 328 sont reliées aux sorties des portes 320, 322 et 326 si bien que le signal $CK_3$ libéré par la porte 324 se retrouve en sortie de la porte 328.

Les sorties $\overline{Q}$ des bascules 300-306 sont reliées aux quatre entrées d'une porte logique "NON ET" 330 dont la sortie est envoyée sur un inverseur logique 332 qui est relié à l'entrée $\overline{S}$ ("set") d'une bascule RS 334.

La sortie Q de la bascule 334 attaque l'entrée $\overline{C}$ ("clear") de remise à zéro de la bascule 310 et l'entrée $\overline{C}$ ("clear") de remise à zéro de ladite bascule 334 reçoit le signal $\overline{RG}$ de réinitialisation qui se produit toutes les deux mesures (après un tir amont et un tir aval).

Ainsi, la sortie Q de la bascule 304 passant à 1, la sortie $\overline{Q}$ passe à 0. la sortie de la porte 330 passe à 1 et l'entrée $\overline{S}$ de la bascule 334 est donc à 0 ce qui force à 1 la sortie Q de ladite bascule 334 et à 0 la sortie $\overline{Q}$.

De ce fait, l'entrée $\overline{C}$ ("clear") de la bascule 310 passe à 0, la sortie Q passe à 0 ce qui verrouille les portes logiques 312-318. La bascule RS 334 assure donc le verrouillage de la sélection de signaux d'horloge et le signal d'horloge $CK_3$ (CLS) sélectionné par la bascule 304 est ainsi mémorisé dans ladite bascule 304.

Cette variante permet de réduire la consommation énergétique du dispositif car les signaux $CK_i$ ne sont pas adressés directement sur les entrées d'horloge CK des bascules 300-306.

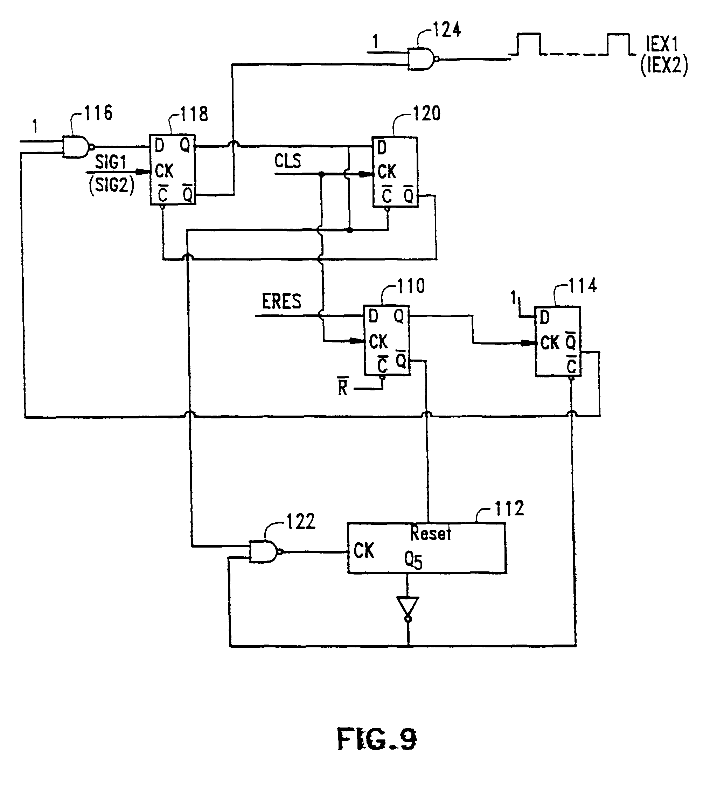

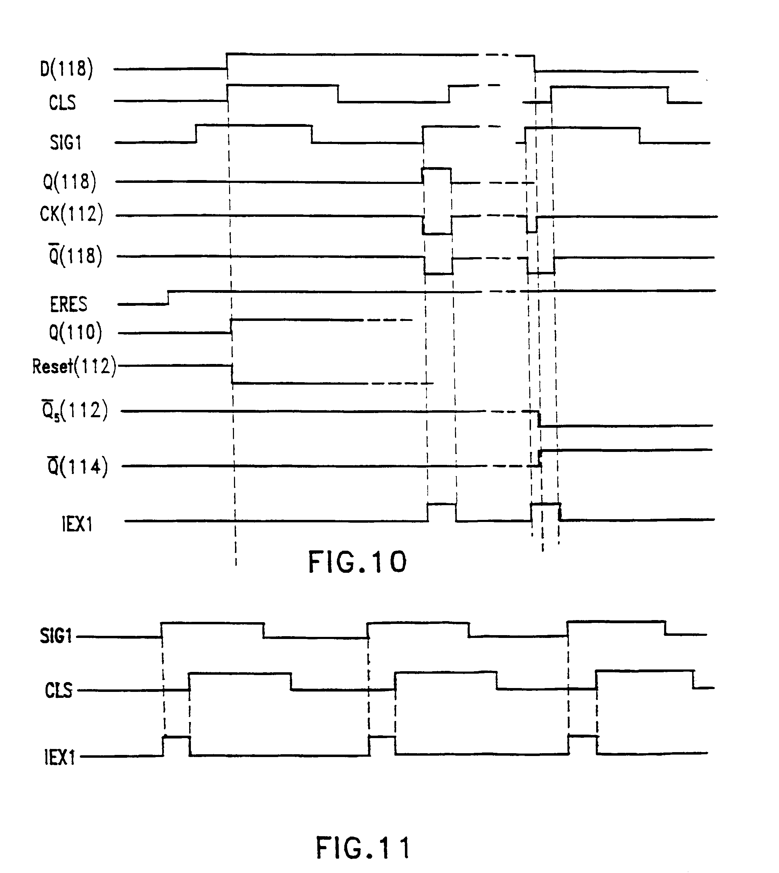

La description qui va suivre faite en référence aux figures 9 et 10 illustre la génération du signal $SIG_1$ - CLS, noté $IEX_1$, qui est formé à partir d'un nombre entier m de périodes consécutives du signal $SIG_1$.

Le signal $IEX_1$ se présente sous la forme de m créneaux où la largeur de chaque créneau correspond au temps écoulé entre l'apparition de la partie caractéristique d'une période du signal $SIG_1$, par exemple son front montant, et l'apparition de la première transition du signal CLS qui suit, c'est-à-dire par exemple le front montant de ce signal (Fig.10).

Le nombre m est par exemple égal à 16 afin de réduire le bruit accompagnant les mesures et pour une fonction de moyennage.

Lorsque la sortie Q de la bascule 60 (Fig.6) passe à 1, le signal ERES autorise une bascule 110 de type D (Fig.9) à rendre actif le signal d'horloge sélectionné CLS sur l'entrée d'horloge CK de ladite bascule 110.

L'entrée $\overline{C}$ ("clear") de remise à zéro de cette bascule 110 est reliée au signal $\overline{R}$ de remise à zéro qui est activé au début de chaque mesure.

Lors d'un front montant du signal CLS (Fig.10), la sortie Q de la bascule 110 passe à 1 ce qui force à 0 la sortie $\overline{Q}$ de cette bascule et lève ainsi l'entrée de remise à zéro "Reset" d'un compteur 16 bits, 112, par exemple de type HC4040, qui va débuter le comptage des 16 créneaux. La sortie Q5 du compteur 112 passe à 1 au début du seizième créneau et l'inverse de ce signal est envoyé sur l'entrée $\overline{C}$ ("clear") de remise à zéro d'une bascule 114 de type D.

La sortie Q de la bascule 110 est reliée à l'entrée d'horloge CK de la bascule 114 dont l'entrée D est à 1 en permanence, et le passage à 1 de la sortie Q de la bascule 110 force à 0 la sortie $\overline{Q}$ de la bascule 114.

La sortie $\overline{Q}$ de cette bascule 114 est envoyée sur une entrée d'une porte logique "NON ET" 116 dont l'autre entrée est à 1 en permanence et dont la sortie est reliée à l'entrée D d'une bascule 118 de type D.

La sortie Q de la bascule 114 passant à 0, l'entrée D de la bascule 118 passe à 1 (Fig.10).

Le premier front montant du signal $SIG_1$ qui se présente à l'entrée d'horloge CK de la bascule 118, après que l'entrée D soit passée à 1, provoque le passage à 1 de la sortie Q de cette bascule (Fig.10).

La sortie Q de la bascule 118 est reliée, d'une part, à l'entrée D d'une bascule 120 de type D et, d'autre part, à l'entrée $\overline{C}$ ("clear") de remise à zéro de cette bascule ainsi qu'à l'une des entrées d'une porte logique "NON ET" 122 dont la sortie attaque l'entrée d'horloge CK du compteur 112. La sortie $\overline{Q}$ de la bascule 120 est reliée à l'entrée $\overline{C}$ ("clear") de remise à zéro de la bascule 118. Lorsque la sortie Q de la bascule 118 est à 0, la porte 122 reçoit sur l'une de ses entrées un signal logique de valeur 0 et la sortie de cette porte est donc à 1.

Dès que la sortie Q de la bascule 118 passe à 1, la sortie de la porte 122 passe à 0 et le front descendant ainsi généré déclenche le comptage du premier créneau par le compteur 112.

Simultanément, la sortie $\overline{Q}$ de la bascule 118 qui était à 1 passe à 0 et force ainsi à 1 la sortie d'une porte logique 124.

Dès que le premier front montant du signal d'horloge sélectionné CLS se présente (Fig.10) à l'entrée d'horloge CK de la bascule 120, la sortie $\overline{Q}$ de cette bascule passe à 0 ce qui force à 0 la sortie Q de la bascule 118.

Par conséquent, le signal issu de la sortie $\overline{Q}$ de la bascule 118 passe à 1 et le premier créneau du signal IEX$_1$ est formé (Fig.10).

Seize créneaux consécutifs sont ainsi formés de façon analogue.

L'apparition du seizième front montant consécutif du signal SIG$_1$ provoque de la même façon le passage à 0 du signal en sortie de la porte logique 122 activant ainsi le comptage du dernier créneau par le compteur 112.

Le signal issu de la sortie $\overline{Q}$ de la bascule 118 passe donc également à 0. L'apparition du seizième front descendant en entrée d'horloge CK du compteur 112 fait passer à 1 la sortie Q5 de ce compteur et donc à 0 la sortie inversée, verrouillant ainsi la porte NON ET 122.

De ce fait, le signal en sortie de la porte logique 122 repasse à 1 (Fig.10) ce qui arrête le comptage. L'entrée $\overline{C}$ ("clear") de remise à zéro de la bascule 114 passe à 0. forçant ainsi à 1 la sortie $\overline{Q}$ de la bascule 114 et donc à 0 l'entrée D de la bascule 118 ce qui bloque cette dernière bascule.

Lorsque le front montant suivant du signal d'horloge sélectionné CLS apparaît en entrée d'horloge CK de la bascule 120, la sortie $\overline{Q}$ de celle-ci passe à 0 ce qui force à 1 la sortie $\overline{Q}$ de la bascule 118 et le seizième créneau du signal IEX$_1$ est formé (Fig.10).

L'étape suivante consiste à déterminer le temps tl qui correspond à la somme sur ces seize créneaux des temps écoulés entre l'apparition sur chaque période du signal SIG1 du front montant de ce signal et l'apparition du premier front montant du signal CLS qui se présente immédiatement après.

Cette étape consiste en fait à déterminer la somme des largeurs des seize créneaux formés (Fig.

11) dont trois seulement sont représentés sur la figure 11.

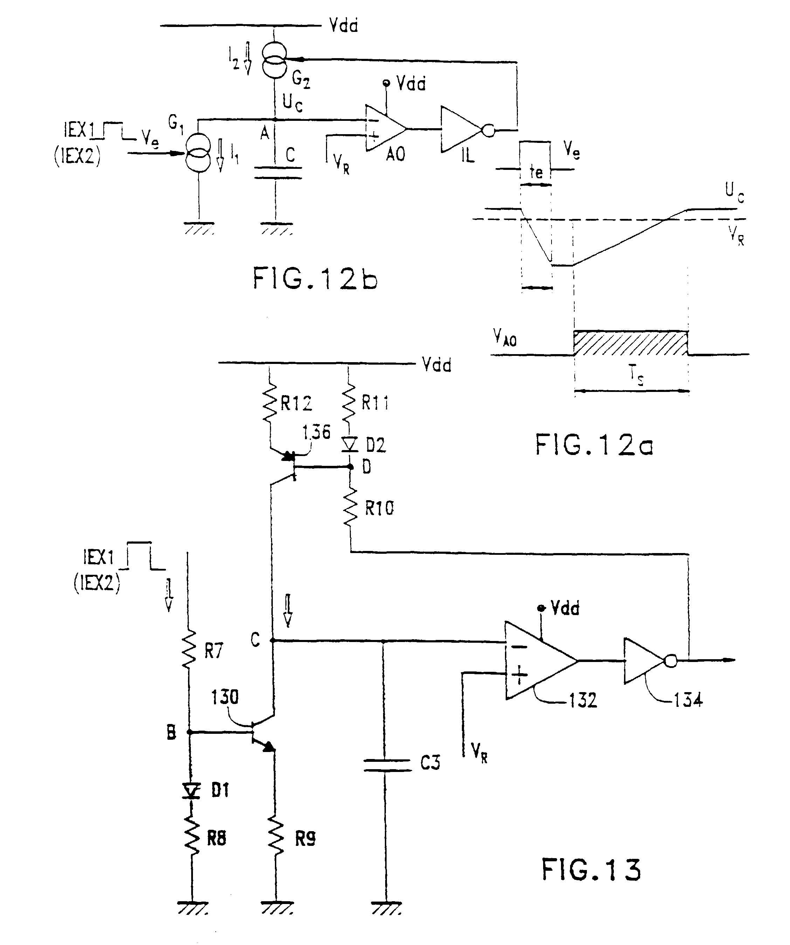

La figure 12b est une vue schématique simplifiée d'un expanseur de temps. Un expanseur de temps est utile en raison de la faible "largeur" des créneaux du signal IEX$_1$ qui ne peut pas être déterminée par des moyens classiques tels que par exemple le comptage d'impulsions qui nécessiterait une horloge et un compteur de très haute fréquence.

La "largeur" de chacun des créneaux du signal IEX$_1$ obtenus avec quatre signaux d'horloge peut par exemple représenter un temps unitaire de l'ordre de 130 à 375 ns.

Comme représenté sur cette figure, le signal IEX$_1$, représenté par une tension $V_e$ pouvant prendre les valeurs logiques 0 ou 1, est envoyé sur un générateur de courant G$_1$ délivrant un courant I$_1$. Ce générateur est relié par l'une de ses bornes au point A. Un condensateur C de capacité par exemple égale à 22 nF, est relié par une de ses armatures au point A et la tension $U_c$ aux bornes du condensateur est appliquée à l'entrée inverseuse d'un amplificateur opérationnel AO utilisé en comparateur.

L'entrée non inverseuse de ce comparateur AO reçoit une tension de référence $V_R$ (par exemple +1.5 v).

Le comparateur est alimenté par une tension $V_{dd}$ (par exemple 3,3 v).

La sortie du comparateur AO est connectée à un inverseur déclencheur ("trigger") logique IL dont la sortie est envoyée sur un second générateur de courant G$_2$ qui délivre un courant I$_2$. Ce second générateur est alimenté par la tension Vdd et est connectée par une de ses bornes au point A.

Lorsque la tension $V_e$ vaut 0 (Fig.12a), le courant I$_1$ est nul, la tension $U_c$ aux bornes du condensateur reste supérieure à la tension de référence $V_R$, la sortie VAO du comparateur est nulle, la sortie de l'inverseur IL est à 1 et le courant I$_2$ est nul.

Lorsque la tension $V_e$ vaut 1 (Fig.12a), le courant I$_1$ vaut par exemple 3mA et le condensateur C se décharge jusqu'à une certaine valeur $U_c$ inférieure à $V_R$ pour laquelle la tension Ve redevient nulle.

La tension de sortie VAO passe ensuite à sa valeur maximale (par exemple égale à 2,8 v) et celle de IL passe à 0 ce qui permet de recharger progressivement le condensateur par le courant I$_2$, de valeur à peu près égale à 3μA, jusqu'à une valeur supérieure à la tension $V_R$, puis la valeur de la tension VAO retombe alors à zéro (Fig.12a), celle de IL passe à 1 et I$_2$ redevient nul.

Étant donné que I$_1$t$_e$ = I$_2$T$_s$ = CUc = constante, on en déduit le rapport I$_1$/I$_2$ qui est par exemple égal à 1 000 avec I$_1$ = 3mA et I$_2$ = 3μA.

Ainsi T$_s$/t$_e$ = 1 000.

Par conséquent, pour chaque "largeur" ou durée t$_e$ d'un créneau, on obtient un temps expansé T$_s$ en sortie du comparateur qu'il suffit de déterminer de manière classique pour en déduire la largeur t$_e$ = T$_s$/1000.

Le temps $T_s$ est par exemple déterminé par la valeur de la résistance R10 sur le montage de la figure 13.

Le montage représenté à la figure 13 est un exemple de montage réalisant la fonction d'expanseur de temps décrite ci-dessus.

Le montage comprend une résistance R7 à travers laquelle passe le signal $IEX_1$ (Figs.9 et 10), connectée à un point B auquel sont également connectés, d'une part, une diode D1 montée en série avec une résistance R8 et, d'autre part, la base d'un transistor NPN 130.

L'émetteur de ce transistor NPN est relié à la masse par l'intermédiaire d'une résistance R9 tandis que le collecteur est relié à un point C.

Un niveau logique 1 sur le signal IEX1 définit dans le réseau R7, D1, R8 un potentiel B auquel est soumise la base du transistor 130. Le courant est donc sensiblement défini par la formule $i = (V_B - v_{be})/R9$, où $v_{be}$ désigne la tension base-émetteur du transistor 130, soit environ 0,65v.

Un condensateur C3 est connecté par une de ses armatures au point C et à l'entrée inverseuse d'un comparateur 132 alimenté par une tension Vdd, l'entrée inverseuse de ce comparateur étant soumis à une tension de référence $V_R$.

La sortie est envoyée, d'une part, vers un timer de mesure associé à un microprocesseur non représenté sur les figures et, d'autre part sur une résistance R10.

La résistance R10 est connectée à un point D auquel sont également connectés, d'une part, une diode D2 montée en série avec une résistance R11 et, d'autre part, la base d'un transistor 136.

L'émetteur du transistor PNP 136 est relié à une résistance R12 tandis que le collecteur est relié au point C précédemment mentionné.

Une tension Vdd assure l'alimentation du montage.

Ce montage fonctionne de la manière indiquée précédemment en référence aux figures 12a et 12b.

Les générateurs de courant $G_1$ et $G_2$ de la figure 12b sont respectivement remplacés par les transistors 130 et 136 tandis qu'une diode et une résistance montées en séné ont été ajoutées en relation avec chacun des transistors afin de compenser la dérive en température de la diode émetteur/base des transistors.

Ainsi, après avoir expansé le temps correspondant à la somme des largeurs des seize créneaux du signal $IEX_1$ on obtient le temps $t_1$ qui est caractéristique de la propagation du signai ultrasonore émis par le transducteur $T_1$ en direction du transducteur $T_2$ situé en aval (Fig.1).

Environ 40 ms après le début de l'émission du signal à partir du transducteur $T_1$ le signal R de remise à zéro est généré afin de réinitialiser les blocs logiques d'élaboration des signaux IEX.

Le transducteur $T_2$ émet ensuite un signal ultrasonore en direction du transducteur $T_1$ consécutivement à un signal d'excitation $SE_2$ de fréquence égale à 1MHz, généré par le séquenceur 24.

Le bloc de commutation commandé par le microprocesseur est basculé de manière à ce que l'interrupteur 44 soit ouvert et l'interrupteur 46 soit fermé.

Le transducteur $T_1$ reçoit le signal ultrasonore qui s'est propagé de l'aval vers l'amont environ $90_{ms}$ après l'instant de début d'émission et ce signal est conditionné par l'inverseur 48 pour obtenir le signal $SIG_2$ qui a l'allure indiquée sur la figure 5a.

Le bloc qui a été décrit en relation avec la figure 6 reste activé dans l'état où il était lorsque le signal d'horloge CLS a été sélectionné et ce bloc délivre donc le signal CLS.

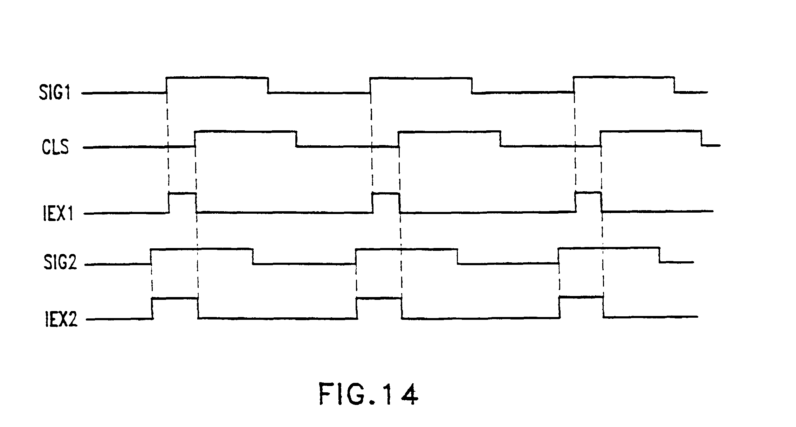

Le signal $SIG_2$ est synchronisé avec le signal C4M pour générer le signal SIG2S. Le signal $SIG_2$ est envoyé sur l'entrée d'horloge CK de la bascule 118 (Fig. 9). tandis que le signal d'horloge sélectionné CLS est envoyé sur les entrées d'horloge CK des bascules 110 et 120. Une partie du signal $SIG_2$ est sélectionnée par le signal ERES qui valide l'entrée D de la bascule 110. Le bloc représenté sur la figure 9 fonctionne de manière analogue à ce qui a été décrit concernant la formation du signal $IEX_1$ et le signal $IEX_2$ est donc généré de cette façon. Les signaux $IEX_1$ et $IEX_2$ sont représentés sur la figure 14.

Ils sont représentés l'un au dessus de l'autre pour la commodité de l'exposé mais il est clair qu'ils ne sont pas simultanés dans le temps.

Le signal $IEX_2$ est ensuite traité par le montage du circuit d'expansion de temps représenté à la figure 13 et de manière identique à ce qui a déjà été décrit en référence à cette figure.

Le temps $t_2$ caractéristique de la propagation du signal ultrasonore émis par le transducteur $T_2$ vers le transducteur $T_1$ est ainsi déterminé comme décrit précédemment pour le temps $t_1$.

La différence de ces temps $t_2-t_1$ est ensuite calculée par le microprocesseur et le débit de fluide Q qui est proportionnel à cette différence est alors déduit de la formule suivante : $Q = K (t_2-t_1)/C$ où K est un terme qui tient compte de la géométrie du compteur et C est un terme correcteur lié à la vitesse de propagation du son dans l'eau.

Le débit Q peut également se mettre sous la forme $Q = 2LS (t_2-t_1) / (t_1+t_2)^2$ avec la géométrie de la figure 1 où L et S sont respectivement la longueur du tube et la section de passage du tube.

Avec L = 10cm, S = 1cm$^2$ et $t_1+t_2 = 160_{\mu s}$ on trouve Q = 1406 1/h.

Avantageusement, le signal CLS est une référence temporelle temporaire qui est utilisée comme référence intermédiaire pour déterminer les temps $t_1$ et $t_2$. Cette référence ensuite est éliminée lorsque l'on détermine la différence $t_1-t_2$ qui va fournir l'indication métrologique recherchée.

Cette méthode ne nécessite pas de reconstituer la phase du signal pour déterminer le temps de propagation dudit signal ce qui est moins dispendieux en énergie. En outre, cette méthode est plus souple que celles utilisées dans l'art antérieur puisque l'on crée la référence temporelle et il n'est donc pas nécessaire de tenir compte du signal d'émission.

La méthode selon l'invention est fiable étant donné que l'on travaille en numérique et cette méthode est également très précise.

Pour une fréquence d'émission de 1MHz, le temps de propagation d'un signal ultrasonore est de l'ordre de 70 à 8U ms et la rotation de phase du signal émis varie de 140 à 160 $\pi$.

Si, par exemple, le temps de propagation amont-aval est égal à 70 $\mu$s, ce qui correspond à une rotation de phase du signal de 140 $\pi$, alors le temps de propagation aval-amont peut être égal à 70 $\mu$s + 500ns et la rotation de phase correspondante est égale à 140 $\pi + \pi$ pour un débit d'eau maximum.

Pour une application au comptage d'eau domestique le débit maximum est par exemple égal à 2m$^3$/h avec une conduite 12 de diamètre égal à 10 mm. Cela signifie dans ce cas, que la différence des temps expansés $t_2$-$t_1$ est égale à 500ns ce qui correspond à un déphasage de $\pi$.

Il suffit de quatre signaux d'horloge CK$_i$ tels que ceux décrits précédemment pour déterminer une différence des temps $t_2$-$t_1$ égale à 500ns avec une consommation minimale.

Dans le cas où le déphasage est supérieur à $\pi$, il est indispensable d'augmenter le nombre des signaux d'horloge.

Il est possible d'augmenter le nombre de signaux d'horloge CK$_i$ en vue d'accroître la dynamique de la mesure du débit mais la consommation énergétique sera plus importante.

En modifiant la fréquence d'émission des signaux ultrasonores il est possible, soit d'augmenter la précision de la mesure et donc de réduire la dynamique du compteur (fréquence augmentée), soit d'accroître la dynamique du compteur mais en réduisant la précision de la mesure (fréquence diminuée).

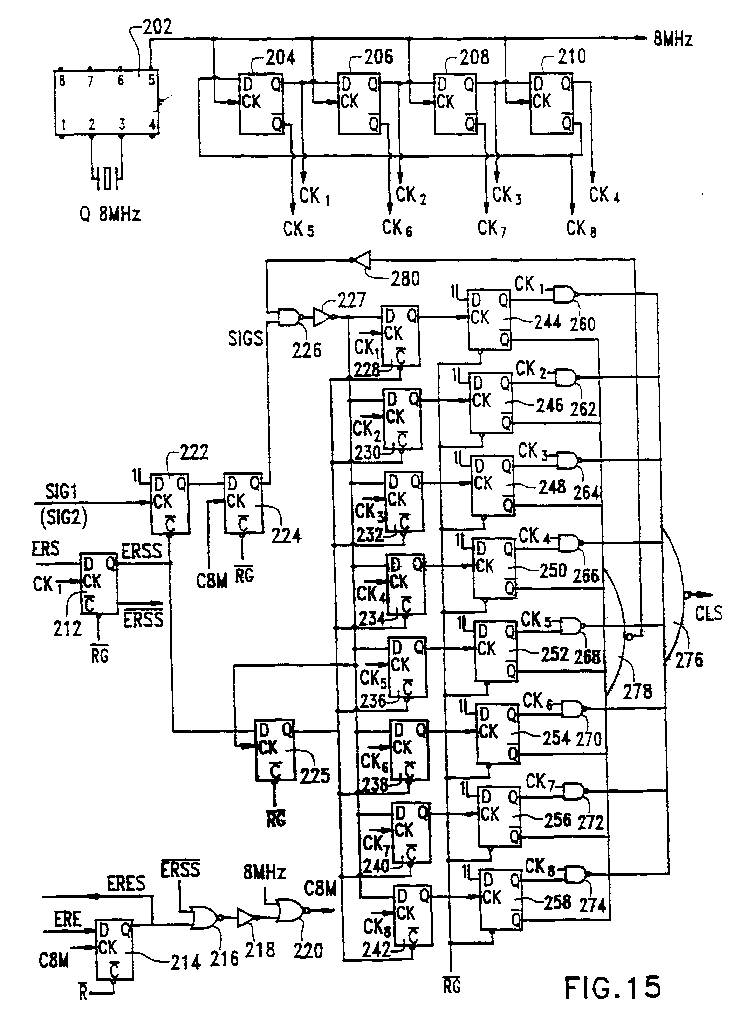

Un second mode de réalisation est représenté à la figure 15 et va être décrit ci-après.

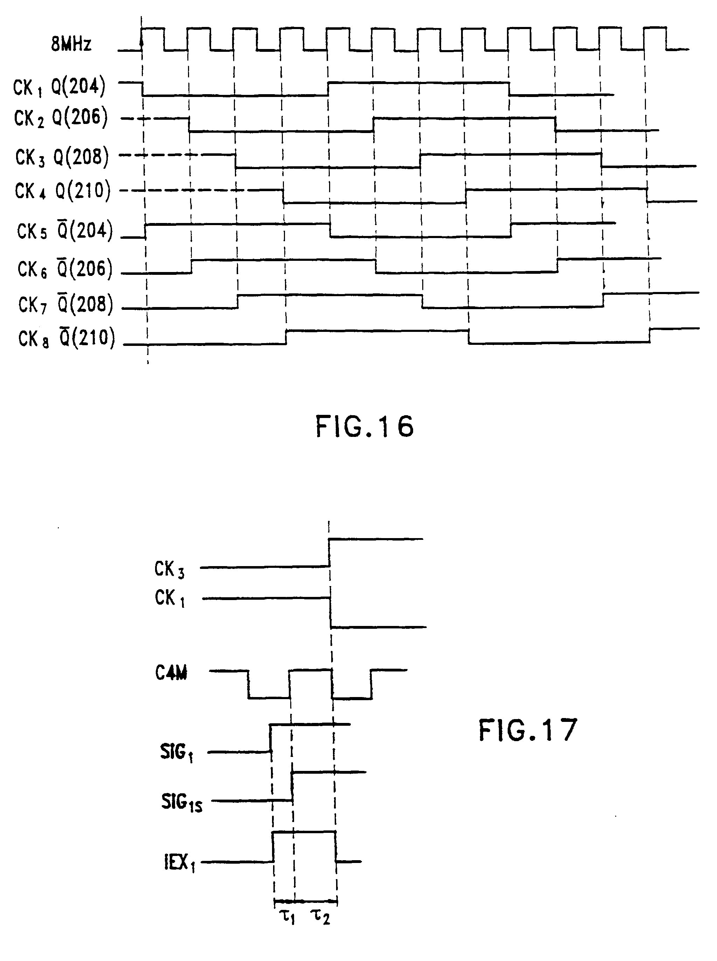

Comme représenté sur la figure 15, le dispositif de mesure comprend des moyens 200 de formation de huit signaux d'horloge CK$_i$, avec i = 1 à 4. La figure 16 indique l'allure des signaux CK$_i$ formés.

Ces moyens comprennent un oscillateur à quartz 202 de fréquence égale à 8MHz. Cet oscillateur délivre un signal d'horloge qui attaque les entrées d'horloge CK de quatre bascules 204, 206, 208, 210 de type D qui forment un diviseur.

La sortie $\overline{Q}$ de la bascule 210 est connectée à l'entrée D de la bascule 204 et les sorties Q des bascules 204, 206 et 208 sont reliées respectivement à l'entrée D des bascules 206, 208 et 210.

En supposant que le signal CK$_4$ est à 0, lorsqu'un front montant du signal d'horloge à 8MHz se présente, le signal d'horloge CK$_1$ délivré par la sortie Q de la bascule 204 passe à 1 et l'entrée D de la bascule 206 prend donc également la valeur 1.

Le signal d'horloge CK$_5$ délivré par la sortie $\overline{Q}$ de la bascule 204 passe donc à 0. Sur le front montant suivant du signal d'horloge à 8MHz, le signal d'horloge CK$_2$ délivré par la sortie Q de la bascule 206 passe à 1.

Ainsi, le signal d'horloge CK$_6$ délivré par la sortie $\overline{Q}$ de la bascule 206 passe à 0.

Le front montant suivant du signal d'horloge à 8MHz fait passer à 1 le signal d'horloge CK$_3$ délivré par la sortie Q de la bascule 208, tandis que le signal d'horloge CK$_7$ délivré par la sortie $\overline{Q}$ de ladite bascule passe à 0.

Le front montant suivant du signal d'horloge à 8MHz fait passer à 1 le signal d'horloge CK4 délivré par la sortie Q de la bascule 210, ce qui fait passer à 0 le signal d'horloge CK$_8$ délivré par la sortie $\overline{Q}$ de ladite bascule et donc l'entrée D de la bascule 204 prend également la valeur 0.

Lors du prochain front montant du signal d'horloge à 8MHz, le signal d'horloge CK$_1$ retombe à 0, tandis que le signal CK$_5$ passe à 1 et ainsi l'entrée D de la bascule 206 passe également à 0.

Lorsque le front montant suivant du signal d'horloge à 8MHz se présente, le signal d'horloge CK$_2$ délivré par la sortie Q de la bascule 206 passe à 0 et le signal CK$_6$ passe donc à 1.

Lorsqu'un autre front montant du signal d'horloge à 8MHz apparaît, le signal d'horloge CK$_3$ délivré par la bascule 208 passe à 0 et le signal d'horloge CK$_7$ passe donc à 1.

Le front montant suivant du signal d'horloge à 8MHz fait passer à 0 le signal d'horloge CK$_4$ et à 1 le signal d'horloge CK$_8$, ce qui force à 1 l'entrée D de la bascule 204.

Lors d'un autre front montant du signal d'horloge à 8MHz, le signal d'horloge CK$_1$ passe à 1, le signal d'horloge CK$_5$ passe donc à 0. Un front montant suivant du signal d'horloge à 8MHz fait passer à 1 le signal d'horloge CK$_2$, et donc fait passer à 0 le signal d'horloge CK$_6$.

Le front montant du signal d'horloge à 8MHz fait passer à 1 le signal d'horloge CK$_3$ et à 0 le signal d'horloge CK$_7$.

Sur le front montant suivant du signal d'horloge à 8MHz, le signal d'horloge CK$_4$ passe à 1 et le signal d'horloge CK$_8$ passe à 0, ce qui force à 0 l'entrée D de la bascule 204.

Ainsi, les huit signaux d'horloge CK$_1$, CK$_2$, CK$_3$, CK$_4$, CK$_5$, CK$_6$, CK$_7$ et CK$_8$ sont formés.

Ces signaux ont même fréquence que les signaux d'excitation SE$_1$ et SE$_2$ des transducteurs (1 MHz) qui sont créés par exemple à partir du signal d'horloge CK$_1$. Les signaux sont déphasés entre eux de $\pi/4$ et sont dans une relation de phase fixe par rapport aux signaux d'excitation des transducteurs.

En outre, ces signaux présentent des transitions entre une valeur logique 0 et une valeur logique 1.

Comme représenté à la figure 3, un signal ERS dit de synchronisation est généré par le décodeur 28 du séquenceur 26 et son allure est représentée sur les figures 5a et 5b.

Sa valeur logique est à 0 et au bout d'un temps égal à 95 ms, sa valeur passe à 1 lorsque le signal reçu se situe dans sa partie centrale qui est moins perturbée que le début ou la fin dudit signal reçu. Ce signal déclenche le début de la phase de sélection d'un signal d'horloge $CK_i$.

En référence à la figure 15, le signal ERS est envoyé sur l'entrée D d'une bascule 212 de type D. Cette bascule permet de générer à sa sortie Q un signal ERSS qui correspond au signal ERS synchronisé avec le signal d'horloge $CK_1$ qui est envoyé sur l'entrée d'horloge CK de la bascule 212.

Le signal CK1 a été choisi arbitrairement.

Un signal ERE est généré par le décodeur 28 du séquenceur 26 (Fig.3) et son allure est représentée sur la figure 5b.

Sa valeur logique est à 0 et, 2 ms après le passage à 1 du signal ERS, sa valeur passe à 1. Ce signal va déclencher le début de la phase de mesure.

En référence à la figure 15, le signal ERE est envoyé sur l'entrée D d'une bascule 214 de type D dont l'entrée $\overline{C}$ ("clear") de remise à zéro est reliée à un signal $\overline{R}$ qui la réinitialise au début d'une mesure.

La sortie Q de la bascule 214 est connectée à l'une des entrées d'une porte logique 216 de type "NON OU", l'autre entrée recevant le signal $\overline{ERSS}$.

La sortie de cette porte 216 est reliée à un inverseur 218 dont la sortie est connectée à l'une des entrées d'une porte logique 220 de type "NON OU", l'autre entrée recevant le signal d'horloge à 8MHz.

En sortie de cette porte 220, un signal C8M de fréquence égale à 8MHz est délivré. Le signal C8M est réinjecté sur l'entrée d'horloge CK de la bascule 214. Ce signal C8M est déclenché par le passage de $\overline{ERSS}$ à zéro et est supprimé lors de l'apparition du signal ERE synchronisé par ce même signal C8M.

La sortie Q de la bascule 214 fournit un signal ERES qui correspond au signal ERE synchronisé avec le signal C8M. Ce signal sert à valider le bloc de mesure.

Le signal synchronisé ERSS est envoyé sur l'entrée $\overline{C}$ ("clear") de remise à zéro d'une bascule 222 de type D. Le signal SIG (SIG1 ou SIG2) est envoyé sur l'entrée d'horloge CK de cette bascule dont l'entrée D est à 1.

La sortie Q de la bascule 222 est reliée à l'entrée D d'une bascule 224 de type D.

Le signal C8M est envoyé sur l'entrée d'horloge CK de cette bascule 224 et l'entrée $\overline{C}$ ("clear") de remise à zéro est reliée un signal $\overline{RG}$ qui a pour fonction d'initialiser cette bascule au début d'un cycle complet de mesures.

Lorsque le signal ERSS en sortie Q de la bascule 212 passe à 1, le premier front montant du signal

conditionné $SIG_1$ (ou $SIG_2$) fait passer à 1 la sortie Q de la bascule 222 autorisant ainsi le passage à 1 de la sortie Q de la bascule 224 lors du premier front montant du signal C8M.

Le signal SIG1S ainsi formé correspond au signal $SIG_1$ synchronisé avec le signal C8M.

Le signal ERSS est également envoyé sur l'entrée D d'une bascule 225 de type D. L'entrée C ("clear") de remise à zéro de la bascule 225 reçoit le signal précédent RG.

Le signal commun SIG1S est envoyé sur l'une des entrées d'une porte logique 226 du type "NON ET" dont la sortie est dirigée sur un inverseur 227 qui envoie le signal inversé sur l'entrée D de huit bascules 228, 230, 232, 234, 236, 238, 240, 242 de type D et sur l'entrée d'horloge CK de la bascule 225.

L'entrée $\overline{C}$ ("clear") de remise à zéro de chaque bascule est connectée à la sortie Q de la bascule 225.

Lorsque le signal ERSS est à 1, le premier front montant du signal SIG1S vient déclencher la bascule 225 et fait passer à 1 la sortie Q de celle-ci.

Le premier front montant de SIG1S apparaissant après le passage d'ERSS à 1 libère l'entrée $\overline{C}$ ("clear") de remise à zéro des huit bascules 228-242.

Huit autres bascules 244, 246, 248, 250, 252, 254, 256, 258 de type D reçoivent sur leur entrée d'horloge CK respectivement les sorties Q des bascules 228-242.

L'entrée D de ces bascules 244-258 est mise à 1 en permanence et l'entrée $\overline{C}$ ("clear") de remise à zéro de celles-ci est reliée au signal commun d'initialisation RG.

Les sorties $\overline{Q}$ des bascules 244-258 sont connectées respectivement à l'une des entrées de huit portes logiques 260, 262, 264, 266, 268, 270, 272, 274 de type "NON ET", l'autre entrée de ces portes recevant respectivement les signaux d'horloge $CK_1$ à CK8. Les sorties des portes logiques 260-274 sont connectées aux huit entrées d'une porte logique 276 de type "NON ET".

Les sorties $\overline{Q}$ des bascules 244-258, quant à elles, sont reliées aux quatre entrées d'une porte logique 278 de type "NON ET" dont la sortie est inversée par un inverseur logique 280 et est ensuite réinjectée sur la seconde entrée de la porte logique 226.

Dès qu'un front montant du signal SIG1S est identifié par les huit bascules 228 à 242 celles-ci sont activées et reçoivent sur leurs entrées d'horloge CK respectivement les signaux d'horloge $CK_1$ à $CK_8$.

Le signal commun $\overline{RG}$ est à 1 (initialisation en début de mesure), les bascules 244 à 258 sont rendues actives et sont donc sensibles aux sorties Q des bascules 228 à 242.

La première transition ou front montant du premier signal d'horloge qui arrive immédiatement après l'apparition du front montant du signal SIG1S déclenche la sortie Q de la bascule recevant le signal d'horloge concerné.

Par exemple, si $CK_5$ est le signal d'horloge sélectionné, parce que temporellement le plus proche de SIG1S, la sélection de ce signal par la bascule 236 fait passer à 1 la sortie Q de cette bascule ce qui fait également passer à 1 la sortie Q de la bascule 252 correspondante.

Les sorties Q des autres bascules 228 à 234 et 238 à 242 sont toujours à 0.

La sortie $\bar{Q}$ de la bascule 252 est alors à 0 et fait donc passer à 1 la sortie de la porte logique 278. Le signal inversé arrivant sur la seconde entrée de la porte logique 226 est alors à 0 ce qui verrouille la porte et fait passer à 0 le signal commun issu de cette porte et reliant les entrées D des bascules 228 à 242.

De cette manière les bascules 228 à 242 deviennent insensibles aux signaux d'horloge $CK_i$, et les sorties Q de ces bascules restent à 0.

Cela permet d'éviter que d'autres signaux d'horloges puissent être sélectionnés, et de cette façon, le signal d'horloge sélectionné $CK_5$ est mémorisé.

La sortie Q de la bascule 252 étant à 1, le signal $CK_5$ est libéré par la porte logique 268 et vient attaquer l'une des quatre entrées de la porte logique 276. Les autres entrées de cette porte 276 sont à 1 étant donné l'état 0 des sorties Q des bascules 244 à 250 et 254 à 258 et par conséquent, la sortie de la porte 276 délivre le signal $CK_5$ qui sera nommé par la suite CLS. Le signal CLS correspond au signal d'horloge sélectionné par le montage qui vient d'être décrit.

Étant donné que le signal $SIG_1$ a été synchronisé par le signal C8M cela permet d'éviter que les fronts des signaux $SIG_1$ et CLS apparaissent simultanément.

Tout ce qui a été décrit précédemment en relation avec les figures 9 à 14 reste valable pour le second mode de réalisation qui vient d'être décrit.

A titre d'exemple, lorsque l'on utilise quatre signaux d'horloge $CK_i$ avec une fréquence de 4MHz et lorsque l'on synchronise le signal $SIG_1$ avec le signal C4M grâce à la bascule 70, les signaux $CK_1$, $CK_3$, $C_4M$, $SIG_1$, $SIG_1S$ et $IEX_1$ ont, par exemple, l'allure représentée à la figure 17.

Ainsi, lorsque l'on cherche à mesurer la largeur du créneau formé entre un front montant du signal $SIG_1$ et le premier front montant du signal d'horloge $CK_i$ qui se produit immédiatement après (il s'agit de $CK_3$ dans l'exemple choisi) on s'aperçoit que la largeur temporelle de ce créneau (tir aval) se décompose en deux parties : une première partie aléatoire de durée il qui est due à la synchronisation du signal $SIG_1$ avec le signal $C_4M$, la durée $\tau1$ étant comprise entre 0 et 250 ns suivant la position relative des deux signaux $SIG_1$ et $C_4M$, et une seconde partie fixe de durée $\tau2$ qui correspond à une demi-période du signal $C_4M$ soit 125 ns. La largeur temporelle du créneau est donc au maximum de 375 ns.

En revanche, lorsque l'on cherche à mesurer la largeur du créneau formé entre un front montant du signal $SIG_2$ et le premier front montant du signal d'horloge sélectionné $CK_3$ (tir amont), la largeur temporelle de ce créneau est au maximum égale à 1μs-ε soit environ 970 ns, où lms représente la période du signal à 1MHz et ε est un terme de sécurité qui garantit le fonctionnement correct des bascules 118 et 120 de la figure 9.

Par conséquent, lorsque l'on effectue la différence des largeurs temporelles des deux créneaux précédents, on obtient une durée maximale de 595 ns.

En utilisant huit signaux d'horloge $CK_i$ avec une fréquence de 8MHz, la largeur temporelle du créneau obtenu pour le tir amont est toujours la somme de deux termes $\tau_1$ et $\tau_2$, mais $\tau_1$ est alors compris entre 0 et 125 ns (due à la synchronisation avec le signal $C_8M$) et $\tau_2$ vaut 62,5 ns (correspond à une demi-période du signal $C_8M$), ce qui fixe au maximum à 187,5 ns la largeur temporelle de ce créneau.

La largeur temporelle du créneau obtenu pour le tir aval restant inchangée (970 ns), la différence de ces deux termes est alors au maximum de 782,5 ns.

Ceci correpond à une augmentation de la dynamique du dispositif de mesure de 1,3 (= 782,5/595).

Ainsi, par exemple, si la gamme de débits couverte par le dispositif de mesure avec quatre signaux d'horloge s'étend de 0 à 1500l/h, alors le dispositif de mesure avec huit signaux d'horloge permettra de couvrir une gamme s'étendant jusqu'à 19501/h.

Il convient de remarquer que pour augmenter la dynamique du dispositif de mesure utilisant au moins quatre signaux d'horloge, il est possible de remplacer le délai logique correspondant au temps $\tau_2$ par un temps beaucoup plus court qui est encore compatible avec la technologie de la logique utilisée. Ce temps est par exemple obtenu par une cascade d'inverseurs ou par un circuit RC suivi d'un circuit de déclenchement ("trigger").

Avec l'invention, il suffit d'une moyenne sur cinq cycles (un cycle correspondant à un tir amont et un tir aval) pour obtenir une résolution de 50 ps.

## Revendications

1. Procédé de mesure d'un débit de fluide en écoulement consistant à transmettre consécutivement entre deux transducteurs ultrasonores espacés dans la direction de l'écoulement du fluide respectivement deux signaux ultrasonores qui se propagent dans des sens opposés, chaque transducteur recevant respectivement un signal ultrasonore SIG1, SIG2 caractérisé en ce que ledit procédé consiste à : former n signaux d'horloge CKi, i = 1 à n et n $\geq$ 4, comportant des transitions, déphasés entre eux de 2π/n, en relation de phase fixe par rapport à un signal d'excitation des transducteurs et de même fréquence que ce signal, choisir une partie caractéristique d'une période d'un premier signal reçu SIG1 dans un sens de propagation, sélectionner la première transition du signal d'horloge qui se produit immédiatement après l'apparition de ladite partie caractéristique, mémoriser ce signal d'horloge appelé CLS, déterminer le temps t1 correspondant à la somme sur un nombre entier m de périodes consécutives de chacun des temps écoulés entre l'apparition de la partie caractéristique de chacune des m périodes du signal SIG1 et l'apparition de la première transition du signal CLS qui suit, repérer sur m périodes consécutives d'un second signal reçu SIG2 dans le sens de propagation opposé la même partie caractéristique, déterminer le temps t2 correspondant à la somme sur ces m périodes de chacun des temps écoulés entre l'apparition de la partie caractéristique de chacune des m périodes du signal SIG2 et l'apparition de la première transition du signal CLS qui suit, former la différence |t2-t1| et en déduire le débit de fluide Q qui est proportionnel à |t2-t1|.

2. Procédé selon la revendication 1, dans lequel m = 1.

3. Procédé selon la revendication 1, dans lequel m ≠ 1 et la période sur laquelle est choisie la partie caractéristique correspond à la première des m périodes consécutives du premier signal reçu SIG1.

4. Procédé selon la revendication 1, dans lequcl m ≠ 1 et la période sur laquelle est choisie la partie caractéristique précède les m périodes consécutives du premier signal reçu SIG1.

5. Procédé selon l'une des revendications 1 à 4, consistant à conditionner les signaux reçus SIG1 et SIG2 sous la forme de créneaux.

6. Procédé selon la revendication 5, selon lequel la partie caractéristique des périodes des signaux reçus correspond au front montant de chaque créneau.

7. Procédé selon la revendication 5, selon lequel la partie caractéristique des signaux reçus correspond au front descendant de chaque créneau.

8. Procédé selon l'une des revendications 1 à 7, selon lequel les signaux d'horloge CKi se présentent sous la forme de créneaux.

9. Procédé selon la revendication 1, selon lequel la première transition du signal d'horloge CLS est un front montant.

10. Procédé selon la revendication 1, selon lequel la première transition du signal d'horloge CLS est un front descendant.

11. Procédé selon l'une des revendications 1 à 10, consistant à former les différences respectives SIG1 - CLS et SIG2 - CLS entre les signaux afin d'obtenir les signaux respectifs IEX1 et IEX2 qui vont permettre de déterminer les temps respectifs t1 et t2.

12. Procédé selon les revendications 5, 8 et 11 selon lequel les signaux IEX1 et IEX2 se présentent sous la forme de créneaux et qui consiste à expanser la durée cumulée de tous les créneaux pour déterminer les temps respectifs t1 et t2.

13. Procédé selon l'une des revendications 1 à 12, selon lequel le signal d'horloge CKI est en phase avec le signal d'excitation des transducteurs.

14. Procédé selon l'une des revendications 1 à 13, consistant à former quatre signaux d'horloge CKi, i = 1 à 4.

15. Procédé selon l'une des revendications 1 à 13, consistant à former huit signaux d'horloge CKi, i = 1 à 8.

16. Procédé selon l'une des revendications 1 à 15, consistant à former pour chaque signal reçu un signal SIGS déphasé par rapport aux signaux d'horloge CKi.

17. Procédé selon la revendication 16, selon lequel le signal SIGS est déphasé de $\pi/n$ par rapport aux signaux d'horloge CKi.

18. Dispositif de mesure d'un débit de fluide en écoulement comprenant

   - au moins deux transducteurs ultrasonores (T1,T2) espacés dans la direction de l'écoulement du fluide,
   - des moyens de formation d'un signal d'excitation de ces transducteurs,
   - des moyens de réception de deux signaux ultrasonores SIG1 et SIG2 émis respectivement par lesdits transducteurs dans des sens opposés et consécutivement, caractérisé en ce que ledit dispositi f comprend en outre :
   - des moyens (52,54,56:202-210) de formation de n signaux d'horloge CKi, i = 1 à n et n ≥ 4, qui comportent des transitions, sont déphasés entre eux de $2\pi/n$, sont en relation de phase fixe par rapport au signal d'excitation et de même fréquence que ce signal,
   - des moyens (76,78,80,82:228-242) d'identification d'une partie caractéristique d'une période du premier signal reçu SIG1,
   - des moyens (76,78,80,82;228-242) de sélection de la première transition du signal d'horloge CKi qui se produit immédiatement après l'apparition de ladite partie caractéristique,
   - des moyens (84,86,88,90;244-258) de mémorisation de ce signal d'horloge appelé CLS,

- des moyens de détermination du temps t1 correspondant à la somme sur un nombre entier m de périodes consécutives des temps écoulés entre l'apparition de la partie caractéristique de chacune des m périodes du signal SIG1 et l'apparition de la première transition du signal CLS qui suit,

- des moyens (76,78,80,82;228-242) d'identification de la même partie caractéristique sur m périodes consécutives du second signal reçu SIG2,

- des moyens de détermination du temps t2 correspondant à la somme sur ces m périodes des temps écoulés entre l'apparition de la partie caractéristique de chacune des m périodes du signal SIG2 et l'apparition de la première transition du signal CLS qui suit,

- des moyens de formation de la différence |t2-t1| et de déduction du débit de fluide Q qui est proportionnel à t2-t1.

19. Dispositif selon la revendication 18, dans lequel m = 1.

20. Dispositif selon la revendication 18, dans lequel m ≠ 1 et la période sur laquelle est choisie la partie caractéristique correspond à la première des m premières consécutives du premier signal reçu SIG1.

21. Dispositif selon la revendication 18, dans lequel m ≠ 1 et la période sur laquelle est choisie la partie caractéristique précède les m périodes consécutives du premier signal reçu SIG1.

22. Dispositif selon l'une des revendications 18 à 21, dans lequel les moyens de formation des signaux d'horloge CKi comprennent un oscillateur à quartz (52;202) suivi de $n/_2$ bascules (54,56;204; 206,208,210) de type D formant un diviseur et permettant ainsi d'obtenir des signaux CKi déphasés entre eux de $2\pi/_n$.

23. Dispositif selon l'une des revendications 18 à 22, dans lequel les moyens de sélection de la première transition du signal d'horloge comprennent n bascules (76,78,80,82;228-242) de type D, dites de sélection, dont chaque entrée D est reliée au signal commun reçu SIG1 ou SIG2, chaque entrée d'horloge CK recevant un signal d'horloge CKi différent d'une bascule à l'autre et qui peuvent être activées par une entrée RAZ de telle sorte que lorsque l'entrée RAZ des bascule est à "1" et lorsque le signal commun est à "1", lesdites bascules sont sensibles aux signaux CKi.

24. Dispositif selon l'une des revendications 18 à 22, dans lequel les moyens de sélection de la première transition du signal d'horloge comprennent n portes logiques (101,103,105,107) recevant chacune sur une entrée le signal commun reçu SIG1 ou SIG2 et n circuits monostables (106,108,109,111) recevant chacun en entrée un signal d'horloge CK$_i$ différent et dont la sortie est envoyée respectivement sur l'une des autres entrées des n portes logiques (101,103,105,107).

25. Dispositif selon la revendication 23 ou 24, dans lequel les moyens de mémorisation du signal d'horloge CLS comprennent, d'une part, n bascules (84,86,88,90;244-258) de type D, dites de mémorisation, recevant chacune en tant qu'entrée d'horloge CK la sortie Q d'une bascule de sélection (76,78,80,82;228-242), et, d'autre part, une porte logique "NON ET" (278) à n entrées reliées chacune à la sortie Q de chaque bascule de mémorisation, l'entrée D de ces bascules de mémorisation étant à "1" en permanence et le premier signal reçu en entrée d'horloge CK d'une des bascules (84,86,88,90;244-258) activant la fonction de mémorisation de cette dernière en faisant basculer la sortie Q de ladite bascule à 1 et la sortie Q̄ à 0, activant ainsi un circuit de verrouillage (102,104,74; 278,280,226) du signal commun reçu SIG$_1$ ou SIG$_2$.

26. Dispositif selon la revendication 25, dans lequel n portes logiques (92,94,96,98;260-274) "NON ET" reçoivent sur chacune de leurs entrées un signal d'horloge CKi et la sortie Q de la bascule de mémorisation correspondante (84,86,88,90;244-258), la sortie de chacune de ces portes étant reliée à l'une des entrées de la porte logique "NON ET" (100;276) à n entrées, l'une des n portes logiques (92,94,96,98;260-274) libérant le signal d'horloge CK$_i$ associé lorsque la fonction de mémorisation de la bascule de mémorisation correspondante est activée.

**Patentansprüche**

1. Verfahren zum Messen des Durchsatzes eines strömenden Fluids, das darin besteht, nacheinander zwischen zwei in Strömungsrichtung des Fluids beabstandeten Ultraschall-Meßwandlern zwei Ultraschallsignale zu senden, die sich in entgegengesetzten Richtungen ausbreiten, wobei jeder Meßwandler ein entsprechendes Ultraschallsignal SIG1 bzw. SIG2 empfängt, dadurch gekennzeichnet, daß das Verfahren darin besteht: n Taktsignale CKi, i = 1 bis n und n ≥ 4, zu bilden, die Übergänge enthalten, die untereinander um 2π/n phasenverschoben sind und in bezug auf ein Erregungssignal für die Meßwandler in einer festen Phasenbeziehung stehen und die gleiche Frequenz wie dieses Signal besitzen, einen charakteristischen Teil einer Periode eines ersten empfangenen Signals SIG1 in einer Ausbreitungsrichtung zu wählen, den ersten Übergang des Taktsignals zu wählen, der direkt nach dem Auftreten des charakteristischen Teils vorkommt, dieses Taktsignal, das CLS genannt wird, zu speichern, die Zeit tl zu bestimmen, die der Summe aus einer ganzen Zahl m von aufeinanderfolgenden Perioden sämtlicher verstrichener Zeiten zwischen dem Auftreten des charakteristischen Teils jeder der m Perioden des Signals SIG1 und dem Auftreten des ersten Übergangs des folgenden Signals CLS entspricht, in m aufeinanderfolgenden Perioden eines zweiten empfangenen Signals SIG2 in der entgegengesetzten Ausbreitungsrichtung denselben charakteristischen Teil zu bezeichnen, die Zeit t2 zu bestimmen, die der Summe aus diesen m Perioden aller verstrichenen Zeiten zwischen dem Auftreten des charakteristischen Teils jeder der m Perioden des Signals SIG2 und dem Auftreten des ersten Übergangs des folgenden Signals CLS entspricht, die Differenz |t2 - t1| zu bilden und daraus den Fluiddurchsatz Q abzuleiten, der zu |t2 - t1| proportional ist.

2. Verfahren nach Anspruch 1, bei dem m = 1 ist.

3. Verfahren nach Anspruch 1, bei dem m ≠ 1 ist und die Periode, in der der charakteristische Teil gewählt wird, der ersten der m aufeinanderfolgenden Perioden des ersten empfangenen Signals SIG1 entspricht.

4. Verfahren nach Anspruch 1, bei dem m ≠ 1 ist und die Periode, in der der charakteristische Teil gewählt wird, den m aufeinanderfolgenden Perioden des ersten empfangenen Signals SIG1 vorhergeht.

5. Verfahren nach einem der Ansprüche 1 bis 4, das darin besteht, die empfangenen Signale SIG1 und SIG2 als Rechteckimpulse auszubilden.

6. Verfahren nach Anspruch 5, bei dem der charakteristische Teil der Perioden der empfangenen Signale der Anstiegsflanke jedes Rechteckimpulses entspricht.

7. Verfahren nach Anspruch 5, bei dem der charakteristische Teil der empfangenen Signale der Abstiegsflanke jedes Rechteckimpulses entspricht.

8. Verfahren nach einem der Ansprüche 1 bis 7, bei dem die Taktsignale CKi die Form von Rechteckimpulsen besitzen.

9. Verfahren nach Anspruch 1, bei dem der erste Übergang des Taktsignals CLS eine Anstiegsflanke ist.

10. Verfahren nach Anspruch 1, bei dem der erste Übergang des Taktsignals CLS eine Abstiegsflanke ist.

11. Verfahren nach einem der Ansprüche 1 bis 10, das darin besteht, die Differenzen SIG1 - CLS bzw. SIG2 - CLS zwischen den Signalen zu bilden, um die Signale IEX1 bzw. IEX2 zu erhalten, die ermöglichen, die Zeiten tl bzw. t2 zu bestimmen.

12. Verfahren nach den Ansprüchen 5, 8 und 11, bei dem die Signale IEX1 und IEX2 die Form von Rechteckimpulsen besitzen und das darin besteht, die kumulierte Dauer sämtlicher Rechteckimpulse auszudehnen, um die Zeiten tl bzw. t2 zu bestimmen.

13. Verfahren nach einem der Ansprüche 1 bis 12, bei dem das Taktsignal CK1 mit dem Erregungssignal der Meßwandler in Phase ist.

14. Verfahren nach einem der Ansprüche 1 bis 13, das darin besteht, vier Taktsignale CKi, i = 1 bis 4, zu bilden.

15. Verfahren nach einem der Ansprüche 1 bis 13, das darin besteht, acht Taktsignale CKi, i = 1 bis 8, zu bilden.

16. Verfahren nach einem der Ansprüche 1 bis 15, das darin besteht, für jedes empfangene Signal ein Signal SIGS zu bilden, das in bezug auf die Taktsignale CKi phasenverschoben ist.

17. Verfahren nach Anspruch 16, bei dem das Signal SIGS in bezug auf die Taktsignale CKi um $\pi/n$ phasenverschoben ist.

18. Vorrichtung zum Messen des Durchsatzes eines strömenden Fluids, mit:

- wenigstens zwei Ultraschall-Meßwandlern (T1, T2), die in Richtung der Fluidströmung beabstandet sind,

- Mitteln zum Bilden eines Erregungssignals dieser Meßwandler,

- Mitteln zum Empfangen zweier Ultraschallsignale SIG1 und SIG2, die von den beiden Meßwandlern in entgegengesetzten Richtungen und nacheinander gesendet werden, dadurch gekennzeichnet, daß die Vorrichtung außerdem enthält:

- Mittel (52, 54, 56; 202-210) zum Bilden von n Taktsignalen CKi, i = 1 bis n und n ≥ 4, die Übergänge enthalten, untereinander um $2\pi/n$ phasenverschoben sind, in bezug auf das Erregungssignal in einer festen Phasenbeziehung stehen und dieselbe Frequenz wie dieses Signal besitzen,

- Mittel (76, 78, 80, 82; 228-242) zum Identifizieren eines charakteristischen Teils einer Periode des empfangenen ersten Signals SIG1,
- Mittel (76, 78, 80, 82; 228-242) zum Wählen des ersten Übergangs des Taktsignals CKi, der direkt nach dem Auftreten des charakteristischen Teils vorkommt,
- Mittel (84, 86, 88, 90; 244-258) zum Speichern dieses Taktsignals, das CLS genannt wird,
- Mittel zum Bestimmen der Zeit tl, die der Summe aus einer ganzen Zahl m von aufeinanderfolgenden Perioden von verstrichenen Zeiten zwischen dem Auftreten des charakteristischen Teils jeder der m Perioden des Signals SIG1 und dem Auftreten des ersten Übergangs des folgenden Signals CLS entspricht,
- Mittel (76, 78, 80, 82; 228-242) zum Identifizieren desselben charakteristischen Teils in m aufeinanderfolgenden Perioden des empfangenen zweiten Signals SIG2,
- Mittel zum Bestimmen der Zeit t2, die der Summe aus diesen m Perioden verstrichener Zeiten zwischen dem Auftreten des charakteristischen Teils jeder der m Perioden des Signals SIG2 und dem Auftreten des ersten Übergangs des folgenden Signals CLS entspricht,
- Mittel zum Bilden der Differenz |t2 - t1| und zum Ableiten des Fluiddurchsatzes Q, der zu t2 - tl proportional ist.

19. Vorrichtung nach Anspruch 18, in der m = 1 ist.

20. Vorrichtung nach Anspruch 18, in der m ≠ 1 ist und die Periode, in der der charakteristische Teil gewählt wird, der ersten der m aufeinanderfolgenden Perioden des empfangenen ersten Signals SIG1 entspricht.

21. Vorrichtung nach Anspruch 18, in der m ≠ 1 ist und die Periode, in der der charakteristische Teil gewählt wird, den m aufeinanderfolgenden Perioden des empfangenen ersten Signals SIG1 vorhergeht.

22. Vorrichtung nach einem der Ansprüche 18 bis 21, in der die Mittel zum Bilden der Taktsignale CKi einen Quarzoszillator (52; 202) enthalten, gefolgt von n/2 D-Flipflops (54, 56; 204; 206, 208, 210), die einen Teiler bilden und somit ermöglichen, Signale CKi zu erhalten, die untereinander um 2π/n phasenverschoben sind.

23. Vorrichtung nach einem der Ansprüche 18 bis 22, in der die Mittel zum Wählen des ersten Übergangs des Taktsignals n D-Flipflops (76, 78, 80, 82; 228-242) enthalten, die Wähl-Flipflops genannt werden und wovon jeder Eingang D mit dem empfangenen gemeinsamen Signal SIG1 oder SIG2 verbunden ist und jeder Takteingang CK ein Taktsignal CKi empfängt, das von einem Flipflop zum nächsten unterschiedlich ist, wobei die Flipflops durch ein Eingangssignal RAZ aktiviert werden können, derart, daß die Flipflops dann, wenn das Eingangssignal RAZ des Flipflops "1" ist und das gemeinsame Signal "1" ist, für die Signale CKi empfindlich sind.

24. Vorrichtung nach einem der Ansprüche 18 bis 22, in der die Mittel zum Wählen des ersten Übergangs des Taktsignals n Logikgatter (101, 103, 105, 107) enthalten, die jeweils an einem Eingang das empfangene gemeinsame Signal SIG1 oder SIG2 empfangen, sowie n monostabile Schaltungen (106, 108, 109, 111), die jeweils an einem Eingang ein unterschiedliches Taktsignal CKi empfangen und deren Ausgangssignal jeweils an einem der anderen Eingänge der n Logikgatter (101, 103, 105, 107) geschickt wird, enthalten.

25. Vorrichtung nach Anspruch 23 oder 24, in der die Mittel zum Speichern des Taktsignals CLS einerseits n D-Flipflops 84, 86, 88, 90; 244-258), die Speicher-Flipflops genannt werden und jeweils als Eingangstaktsignal CK das Ausgangssignal Q eines Wähl-Flipflops (76, 78, 80, 82; 228-242) empfangen, und andererseits ein NAND-Logikgatter (278) mit n Eingängen, die jeweils an den Ausgang Q des entsprechenden Speicher-Flipflops angeschlossen sind, enthalten, wobei der Eingang D dieser Speicher-Flipflops stets auf "1" liegt und das empfangene erste Signal am Takteingang CK eines der Flipflops (84, 86, 88, 90; 244-258) die Speicherfunktion dieses letzteren aktiviert, indem es den Ausgang Q des Flipflops auf 1 setzt und den Ausgang $\bar{Q}$ auf 0 setzt, wodurch eine Verriegelungsschaltung (102, 104; 74; 278, 280, 226) des empfangenen gemeinsamen Signals SIG1 oder SIG2 aktiviert wird.

26. Vorrichtung nach Anspruch 25, in der n NAND-Logikgatter (92, 94, 96, 98; 260-274) an jedem ihrer Eingänge ein Taktsignal CKi bzw. das Ausgangssignal Q des entsprechenden Speicher-Flipflops (84, 86, 88, 90; 244-258) empfangen, wobei der Ausgang jedes dieser Gatter mit einem Eingang des NAND-Logikgatters (100; 276) mit n Eingängen verbunden ist, wobei eines der n Logikgatter (92, 94, 96, 98; 260-274) das zugeordnete Taktsignal CKi freigibt, wenn die Speicherfunktion des entsprechenden Speicher-Flipflops aktiviert ist.

**Claims**

1. A method of measuring the flow rate of a flowing fluid, the method consisting in causing two ultrasonic signals to propagate consecutively in opposite directions between two ultrasonic transducers spaced apart in the flow direction of the fluid, each transducer receiving a respective ultrasonic signal $SIG_1$, $SIG_2$, said method being characterized in that it consists in: forming $\underline{n}$ clock signals $CK_i$, where i = 1 to n, and n $\geq$ 4, which signals include transitions, are at mutual phase offsets of $2\pi/n$, and in a fixed relationship relative to an excitation signal for exciting the transducers, and are of the same frequency as said excitation signal; choosing a characteristic portion of a period of a first received signal $SIG_1$ received in one propagation direction; selecting the first transition of the clock signal that occurs immediately after said characteristic portion appears; storing the clock signal, referred to as CLS; determining the time $t_1$ corresponding to the sum, over an integer number $\underline{m}$ of consecutive periods, of the times elapsed between the instant at which the characteristic portion of each of the $\underline{m}$ periods of the signal $SIG_1$ appears, and the instant at which the first transition of the following signal CLS appears; identifying the same characteristic portion over $\underline{m}$ consecutive periods of a second signal $SIG_2$ received in the opposite propagation direction; determining the time $t_2$ corresponding to the sum of the times elapsed between the instant at which the characteristic portion of each of the $\underline{m}$ periods of the signal $SIG_2$ appears and the instant at which the first transition of the following signal CLS appears; taking the difference $|t_2-t_1|$; and deducing therefrom the fluid flow rate Q which is proportional to $|t_2-t_1|$ .

2.  A method according to claim 1, in which m = 1.

3.  A method according to claim 1, in which m $\neq$ 1, and the period over which the characteristic portion is chosen corresponds to the first of the $\underline{m}$ consecutive periods of the first received signal $SIG_1$.

4.  A method according to claim 1, in which m $\neq$ 1, and the period over which the characteristic portion is chosen precedes the $\underline{m}$ consecutive periods of the first received signal $SIG_1$.

5.  A method according to any one of claims 1 to 4, consisting in conditioning the received signals $SIG_1$ and $SIG_2$ in the form of squarewave pulses.

6.  A method according to claim 5, in which the characteristic portion of the periods of the received signals corresponds to the rising edge of each pulse.

7.  A method according to claim 5, in which the characteristic portion of the received signals corresponds to the falling edge of each pulse.

8.  A method according to any one of claims 1 to 7, in which the clock signals $CK_i$ are in the form of squarewave pulses.

9.  A method according to claim 1, in which the first transition of the clock signal CLS is a rising edge.

10. A method according to claim 1, in which the first transition of the clock signal CLS is a falling edge.

11. A method according to any one of claims 1 to 10, consisting in taking the respective differences $SIG_1$ - CLS and $SIG_2$ - CLS between the signals so as to obtain the respective signals $IEX_1$ and $IEX_2$ which make it possible to determine the respective times $t_1$ and $t_2$.

12. A method according to claims 5, 8, and 11, in which the signals $IEX_1$ and $IEX_2$ are in the form of squarewave pulses, and which consists in expanding the cumulative duration of all the pulses to determine the respective times $t_1$ and $t_2$.

13. A method according to any one of claims 1 to 12, in which the clock signal $CK_1$ is in phase with the excitation signal for exciting the transducers.

14. A method according to any one of claims 1 to 13, consisting in forming four clock signals $CK_i$, where i = 1 to 4.

15. A method according to any one of claims 1 to 13, consisting in forming eight clock signals $CK_i$, where i = 1 to 8.

16. A method according to any one of claims 1 to 15, consisting in forming, for each received signal, a signal $SIG_S$ that is phase offset relative to the clock signals $CK_i$.

17. A method according to claim 16, in which the signal $SIG_S$ is phase offset by $\pi/n$ relative to the clock signals $CK_i$.

18. Apparatus for measuring the flow rate of a flowing fluid, said apparatus comprising:

    -   at least two ultrasonic transducers ($T_1$, $T_2$) spaced apart in the flow direction of the fluid;
    -   means for forming an excitation signal for exciting the transducers; and
    -   means for receiving two ultrasonic signals $SIG_1$ and $SIG_2$ emitted consecutively by respective ones of said transducers in opposite directions;

    said apparatus being characterized in that it further comprises:

    -   means (52, 54, 56; 202-210) for forming $\underline{n}$ clock

signals $CK_i$, where i = 1 to n, and n ≥ 4, which signals include transitions, arc mutually phase offset by 2π/n, are in a fixed relationship relative to the excitation signal, and are of the same frequency as said excitation signal;

- means (76, 78, 80, 82, 82; 228-242) for identifying a characteristic portion of a period of the first received signal $SIG_1$;

- means (76, 78, 80, 82; 228-242) for selecting the first transition of the clock signal $CK_i$ that occurs immediately after said characteristic portion appears;

- means (84, 86, 88, 90; 244-258) for storing the clock signal, referred to as CLS;

- means for determining the time $t_1$ corresponding to the sum, over an integer number $m$ of consecutive periods, of the times elapsed between the instant at which the characteristic portion of each of the m periods of the signal $SIG_1$ appears, and the instant at which the first transition of the following signal CLS appears;

- means (76, 78, 80, 82; 228-242) for identifying the same characteristic portion over $m$ consecutive periods of the second received signal $SIG_2$;

- means for determining the time $t_2$ corresponding to the sum of the times elapsed between the instant at which the characteristic portion of each of the $m$ periods of the signal $SIG_2$ appears and the instant at which the first transition of the following signal CLS appears; and

- means for taking the difference $|t_2-t_1|$ and for deducing therefrom the fluid flow rate Q which is proportional to $t_2-t_1$.

19. Apparatus according to claim 18, in which m = 1.

20. Apparatus according to claim 18, in which m ≠ 1, and the period over which the characteristic portion is chosen corresponds to the first of the $m$ consecutive periods of the first received signal $SIG_1$.

21. Apparatus according to claim 18, in which m ≠ 1, and the period over which the characteristic portion is chosen precedes the $m$ consecutive periods of the first received signal $SIG_1$.

22. Apparatus according to any one of claims 18 to 21, in which the means for forming the clock signals $CK_i$ comprise a crystal oscillator (52; 502) followed by n/2 D-type bistables (54, 56; 204; 206, 208, 210) forming a divider, and thus making it possible to obtain signals $CK_i$ that are mutually phase offset by 2π/n.

23. Apparatus according to any one of claims 18 to 22, in which the means for selecting the first transition of the clock signal comprise $n$ "selection" D-type bistables (76, 78, 80, 82; 228-242), the D input of each of the bistables being connected to the common received signal $SIG_1$ or $SIG_2$, the clock input CK of each of the bistables receiving a respective clock signal $CK_i$ that is different from one bistable to another, it being possible to activate the bistables via reset-to-zero inputs RAZ in a manner such that when the reset inputs RAZ of the bistables are at 1 and when the common signal is at 1, said bistables are sensitive to the signals $CK_i$.

24. Apparatus according to any one of claims 18 to 22, in which the means for selecting the first transition of the clock signal comprise $n$ logic gates (101, 103, 105, 107), each of which receives the common received signal $SIG_1$ or $SIG_2$ via a respective input, and $n$ monostable circuits (106, 108, 109, 111), each of which receives a different clock signal $CK_i$, and has its output sent to a respective one of the other inputs of the $n$ logic gates (101, 103, 105, 107).

25. Apparatus according to claim 23 or 24, in which the means for storing the clock signal CLS comprise firstly $n$ "storage" D-type bistables (84, 86, 88, 90; 244-258), each of which receives, as a clock input CK, the Q output of a respective selection bistable (76, 78, 80, 82; 228-242), and, secondly a NAND logic gate (278) having n inputs, each of which is connected to the Q̄ output of a respective storage bistable, the D input of each of the storage bistables being permanently at 1, and the first signal received at the clock input CK of one of the bistables (84, 86, 88, 90; 244-258) activating the storage function thereof by causing the Q output of said bistable to go to 1, and its Q̄ output to go to 0, thereby activating a locking circuit (102, 104, 74; 278, 280, 226) for locking the common received signal $SIG_1$ or $SIG_2$.

26. Apparatus according to claim 25, in which each one of $n$ NAND logic gates (92, 94, 96, 98; 260-274) receives a clock signal $CK_i$ and the Q output of the corresponding storage bistable (84, 86, 88, 90; 244-258) via respective ones of its inputs, the output of each of the gates being connected to a respective one of the inputs of the NAND logic gate (100; 276) having $n$ inputs, one of the $n$ logic gates (92, 94, 96, 98; 260-274) releasing the associated clock signal $CK_i$ when the storage function of the corresponding storage bistable is activated.

FIG.1

FIG.2

FIG.3

FIG.4

FIG.5b

FIG.5a

FIG.6

FIG.7

FIG.8c

FIG.8a

FIG.8b

FIG.9

FIG.10

FIG.11

FIG.12b

FIG.12a

FIG.13

FIG.14

FIG.15

FIG.16

FIG.17